(19) **Europäisches Patentamt / European Patent Office / Office européen des brevets**

(11) **EP 2 684 400 B1**

(12) **FASCICULE DE BREVET EUROPEEN**

(45) Date de publication et mention de la délivrance du brevet:
**06.05.2015 Bulletin 2015/19**

(21) Numéro de dépôt: **12707775.8**

(22) Date de dépôt: **09.03.2012**

(51) Int Cl.:
*H04W 28/16* *(2009.01)* *H04W 28/18* *(2009.01)*
*H04W 28/04* *(2009.01)* *H04W 52/24* *(2009.01)*

(86) Numéro de dépôt international:
**PCT/EP2012/054094**

(87) Numéro de publication internationale:
**WO 2012/120113 (13.09.2012 Gazette 2012/37)**

(54) **ADAPTATION DES PUISSANCES DE SOUS-PORTEUSES DANS UN RESEAU A LARGE BANDE COLOCALISE AVEC UN RESEAU A BANDE ETROITE**

ANPASSUNG DER SUBTRÄGERLEISTUNG IN EINER GEMEINSCHAFT AUS BREITBANDNETZ UND SCHMALBANDNETZ

MATCHING SUBCARRIER POWER IN A BROADBAND NETWORK COLLOCATED WITH A NARROWBAND NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2011 FR 1151994**

(43) Date de publication de la demande:
**15.01.2014 Bulletin 2014/03**

(73) Titulaire: **Airbus DS SAS**
**78990 Elancourt (FR)**

(72) Inventeurs:
• **MARQUE-PUCHEU, Gérard**
**F-78480 Verneuil (FR)**
• **GRUET, Christophe**
**F-78180 Montigny le Bretonneux (FR)**
• **SEGUY, Vincent**
**F-92100 Boulogne Billancourt (FR)**

(74) Mandataire: **Bringer, Mathieu et al**
**GEVERS FRANCE**
**9, rue Saint Antoine du T**
**31000 Toulouse (FR)**

(56) Documents cités:
WO-A1-2009/068727 WO-A2-02/03717
US-A1- 2008 268 892 US-A1- 2009 325 625

**EP 2 684 400 B1**

**Description**

La présente invention concerne un procédé pour adapter des puissances de sous-porteuses émises suivant une direction de transmission prédéterminée dans un réseau de radiocommunication cellulaire à large bande en fonction des puissances de porteuses émises dans la large bande suivant la direction de transmission prédéterminée dans un réseau de radiocommunication cellulaire à bande étroite colocalisé avec le réseau à large bande.

La direction de transmission prédéterminée dans les réseaux peut être suivant des liens descendants depuis des stations de base vers des mobiles, ou bien suivant des liens montants depuis des mobiles vers des stations de base. Comme il est connu, les mobiles sont aussi appelés "stations mobiles", "équipements d'usager", ou "terminaux mobiles".

Le réseau à large bande ("broadband" en anglais) est un réseau pour mobiles de la troisième génération 3GPP ("Third Génération Partnership Project" en anglais) basé par exemple sur la technologie E-UTRA ("Evolved-UMTS Terrestrial Radio Access" en anglais), parfois appelée aussi LTE ("Long Term Evolution" en anglais), ou sur la technologie WiMAX mobile ("Worldwide interoperability for Microwave Access" en anglais). Chaque cellule dans le réseau à large bande comprend une station de base pouvant avoir plusieurs secteurs directionnels dans chacun desquels des sous-porteuses réparties dans toute une bande de fréquence commune réservée aux liens descendants peuvent être émises par la station de base, et dans chacun desquels d'autres sous-porteuses dans toute une autre bande de fréquence commune réservée aux liens montants peuvent être émises par des mobiles.

Le réseau à bande étroite ("narrowband" en anglais) est par exemple un réseau de radiocommunication terrestre privé professionnel à bande étroite PMR ("Professional Mobile Radio" en anglais) par exemple du type DMR ("Digital Mobile Radio" en anglais), TETRA ("Terrestrial Trunked Radio" en anglais), TETRAPOL ou P25. Le réseau à bande étroite est structuré en un motif cellulaire de réutilisation de plusieurs cellules ayant chacune une station de base omnidirectionnelle. Des groupes entrelacés de porteuses répartis dans la bande de fréquence réservée aux liens descendants sont attribués respectivement aux cellules d'un motif. De même, d'autres groupes entrelacés de porteuses répartis dans la bande fréquence réservée aux liens montants sont attribués respectivement aux cellules d'un motif.

Ces deux réseaux sont colocalisés ce qui signifie que les cellules sont communes aux réseaux et chaque cellule comprend une station de base du réseau à large bande et une station de base du réseau à bande étroite.

D'une part, la proximité des sous-porteuses et porteuses dans la large bande réservée aux liens descendants ou montants attribuées aux deux réseaux et d'autre part, la colocalisation des stations de base des deux réseaux dans les cellules produisent des interférences néfastes à la réception dans les mobiles et les stations de base et sur la qualité de service des communications radio dans les réseaux. Des interférences élevées dans les cellules du réseau à bande étroite ne peuvent être admises à cause de la qualité de service élevée exigée pour les communications dans le réseau à bande étroite. Par conséquent les émissions dans le réseau à large bande doivent être adaptées aux conditions d'exploitation du réseau à bande étroite.

Une solution simple serait d'interdire dans une station de base du réseau à large bande l'émission de sous-porteuses interférant fortement avec des porteuses émises par des stations de base du réseau à bande étroite situées à proximité de la station de base du réseau à large bande, et d'interdire dans un mobile du réseau à large bande l'émission de sous-porteuses interférant fortement avec des porteuses émises par des mobiles du réseau à bande étroite situés à proximité du mobile du réseau à large bande. Une telle solution réduit considérablement la bande utile du réseau à large bande.

Le document WO2009/068727 A1 est l'état de la technique le plus proche et divulgue deux systèmes cellulaires dont les stations de base sont colocalisées. L'interférence est réduite par l'adaptation de la puissance.

L'objectif de l'invention est de réduire les interférences produites par un réseau sectorisé à large bande sur un réseau à bande étroite colocalisé avec le réseau à large bande pour un seuil de rapport porteuse sur interférence admissible à la réception dans une cellule du réseau à bande étroite.

A cette fin, un procédé pour adapter des puissances de sous-porteuses dans un premier réseau de radiocommunication cellulaire ayant des premières stations de base à plusieurs secteurs directionnels en fonction des puissances de porteuses dans un deuxième réseau de radiocommunication cellulaire ayant des deuxièmes stations de base omnidirectionnelles, les premier et deuxième réseaux ayant en commun des cellules ayant chacune des première et deuxième stations de base colocalisées et une large bande de fréquence incluant les sous-porteuses attribuées aux secteurs des premières stations de base et des groupes de porteuses attribués respectivement aux deuxièmes stations de base dans un motif cellulaire de réutilisation du deuxième réseau ayant plusieurs niveaux concentriques de localisation de cellule, est caractérisé en ce qu'il comprend une atténuation par un paramètre d'atténuation d'une puissance prédéterminée pour chaque sous-porteuse qui est à émettre par un émetteur-récepteur un secteur déterminé de la cellule donnée et qui est voisine d'une porteuse appartenant à l'un des groupes attribués à des deuxièmes stations de base dans des cellules présélectionnées dans le secteur déterminé et sur des niveaux depuis la cellule donnée inférieurs à un niveau élevé prédéterminé, le paramètre d'atténuation étant d'autant plus faible que le niveau respectif est proche de la cellule donnée, les sous-porteuses autres que lesdites sous-porteuses voisines étant à émettre avec la puissance d'émission prédéterminée dans le secteur déterminé par l'émetteur-récepteur.

Une sous-porteuse à émettre est considérée comme voisine d'une porteuse lorsque la porteuse est comprise dans une sous-bande de largeur prédéterminée centrée sur la sous-porteuse. Par exemple, les deuxièmes stations de base du deuxième réseau du type à bande étroite émettent respectivement des porteuses comprises dans la sous-bande de largeur prédéterminée, à raison d'une porteuse par deuxième station de base. Inversement, une sous-porteuse à émettre peut être considérée comme voisine d'une porteuse lorsque la sous-porteuse est comprise dans la bande de fréquence utile centrée sur la porteuse. Par exemple, au moins deux premières stations de base du premier réseau du type à large bande émettent respectivement des sous-porteuses comprises dans la bande de fréquence utile d'une porteuse attribuée à une deuxième station de base.

L'émetteur-récepteur du premier réseau peut être une station de base de réseau lorsque la large bande de fréquence est relative à une direction de transmission pour des liens descendants depuis la station de base vers des mobiles attachés à la station de base, ou bien un mobile lorsque la large bande de fréquence est relative à une direction de transmission pour des liens montants depuis les mobiles vers la station de base.

Selon l'invention, l'émetteur-récepteur décide lui-même de la puissance d'émission de chacune des sous-porteuses. A cause de l'atténuation des puissances d'émission des sous-porteuses dans l'émetteur-récepteur du premier réseau qui est sélective en fonction de la localisation des deuxièmes stations de base par rapport au secteur déterminé de la cellule donnée contenant l'émetteur-récepteur, les interférences produites par le premier réseau à large bande sur le deuxième réseau du type à bande étroite sont réduites, tout en admettant le plus possible de sous-porteuses avec la puissance d'émission prédéterminée dans le premier réseau. La sectorisation de cellules dans le premier réseau permet d'augmenter le rapport porteuse sur interférence dans les cellules du deuxième réseau et donc de diminuer les interférences causées par le premier réseau dans le deuxième réseau.

Les groupes de sous-porteuses attribués aux deuxièmes stations de base peuvent être associés aux paramètres d'atténuation d'une manière fixe indépendamment de la portée d'émetteurs-récepteurs selon une direction de transmission choisie dans les cellules et du trafic dans ces émetteurs-récepteurs.

Selon une réalisation particulière, les groupes de -porteuses attribués aux deuxièmes stations de base sont associés de manière dynamique aux paramètres d'atténuation afin d'adapter les puissances des sous-porteuses à la portée d'émetteurs-récepteurs du deuxième réseau selon une direction de transmission choisie dans les cellules. A cet effet, le procédé peut comprendre une mesure de puissances de réception des porteuses des groupes attribués aux deuxièmes stations de base de cellules présélectionnées dans le secteur déterminé de la cellule donnée en un point situé dans la cellule donnée et dans le secteur déterminé, et un classement des porteuses dans des classes associées respectivement aux niveaux, aux paramètres d'atténuation et à des seuils d'autant plus faibles que les niveaux associés sont éloignés de la cellule donnée, les porteuses dans une classe ayant des puissances de réception comprises entre le seuil associé à la classe et le seuil précédent, la puissance prédéterminée pour une sous-porteuse qui est à émettre par l'émetteur-récepteur étant atténuée par un paramètre d'atténuation lorsque la sous-porteuse est voisine d'une porteuse appartenant à la classe associée au paramètre d'atténuation.

La puissance de réception mesurée d'une porteuse peut être la puissance de réception moyenne de voies de trafic actives supportées par la deuxième porteuse afin d'adapter les puissances d'émission des sous-porteuses à la charge de trafic du deuxième réseau.

Selon une autre variante, la puissance de réception mesurée de chaque porteuse d'un groupe attribué à une deuxième station de base d'une cellule présélectionnée dans le secteur déterminé peut être la moyenne des puissances de réception mesurées pour toutes les porteuses appartenant au groupe. En particulier, la puissance de réception mesurée de chaque porteuse d'un tel groupe peut être la puissance de réception d'une voie balise supportée par l'une des porteuses du groupe.

Pour que des interférences produites par le premier réseau à large bande sur le deuxième réseau du type à bande étroite soient admissibles dans le deuxième réseau, un paramètre d'atténuation cible du rapport porteuse sur interférence à la réception de porteuses dans un émetteur-récepteur localisé dans une cellule du deuxième réseau est défini. Dans ces cas, les paramètres d'atténuation dépendent du paramètre d'atténuation cible. Selon une réalisation particulière, le paramètre d'atténuation pour une sous-porteuse voisine d'une porteuse appartenant à un groupe attribué à des deuxièmes stations de base dans des cellules présélectionnées localisées sur un niveau respectif est $\alpha_i = k \, D_i^\gamma / D_{NB}^\gamma$. k désigne un facteur fonction du paramètre d'atténuation cible et de nombres de cellules localisées présélectionnées localisées respectivement sur les niveaux inférieurs au niveau élevé prédéterminé depuis la cellule donnée. $D_i$ désigne une distance moyenne entre une première station de base et des points des cellules présélectionnées sur le niveau respectif les plus éloignés de la cellule donnée. $D_{NB}$ désigne la distance de réutilisation du motif cellulaire du deuxième réseau. $\gamma$ désigne une constante de propagation dans les réseaux.

Par exemple, pour un motif cellulaire du premier réseau ayant une répartition uniforme de cellules sur chacun de niveaux concentriques, les nombres de cellules présélectionnées dans le secteur déterminé sur les niveaux depuis la cellule donnée sont respectivement égaux au plus aux rangs des niveaux comptés depuis la cellule donnée jusqu'au niveau inférieur au niveau élevé prédéterminé, l'ensemble des cellules présélectionnées sur un niveau étant symétrique par rapport à la bissectrice du secteur déterminé.

Lorsque le nombre de niveaux inférieurs au niveau élevé est supérieur à 2, les émissions de sous-porteuses dans la cellule donnée et dans les cellules présélectionnées adjacentes à la cellule donnée peuvent être considérées comme très fortement perturbatrices des porteuses émises dans ces cellules. Dans ce cas, les paramètres d'atténuation peuvent être nuls pour des sous-porteuses voisines de porteuses appartenant à des groupes attribués à des deuxièmes stations de base dans des cellules présélectionnées dans le secteur déterminé situées sur au moins l'un des deux premiers niveaux, c'est-à-dire sur le premier niveau incluant la cellule donnée dans laquelle l'émetteur est localisé, ou ce premier niveau et le deuxième niveau entourant la cellule donnée. Par conséquent, les sous-porteuses voisines précédemment définies ne sont pas émises par la première station de base incluse dans la cellule donnée.

L'invention concerne également un émetteur-récepteur tel qu'une station de base ou un mobile apte à être localisé dans une cellule donnée d'un premier réseau de radiocommunication cellulaire pour adapter des puissances d'émission de sous-porteuses en fonction des puissances d'émission de porteuses dans un deuxième réseau de radiocommunication cellulaire, les premier et deuxième réseaux ayant en commun des cellules ayant chacune une première station de base à plusieurs secteurs directionnels du premier réseau et une deuxième station de base omnidirectionnelle du deuxième réseau colocalisées et une large bande de fréquence incluant les sous-porteuses attribuées aux secteurs des premières stations de base et des groupes de porteuses attribués respectivement aux deuxièmes stations de base dans un motif cellulaire de réutilisation du deuxième réseau ayant plusieurs niveaux concentriques de localisation de cellule.

L'émetteur-récepteur est caractérisé en ce qu'il comprend un moyen pour atténuer par un paramètre d'atténuation une puissance prédéterminée de chaque sous-porteuse qui est à émettre dans un secteur déterminé de la cellule donnée et qui est voisine d'une porteuse appartenant à l'un de groupes attribués à des deuxièmes stations de base dans des cellules présélectionnées dans le secteur déterminé et sur des niveaux depuis la cellule donnée inférieurs à un niveau élevé prédéterminé, le paramètre d'atténuation étant d'autant plus faible que le niveau respectif est proche de la cellule donnée, et un moyen pour émettre dans le secteur déterminé les sous-porteuses avec la puissance d'émission prédéterminée autres que lesdites sous-porteuses voisines.

Selon une autre réalisation, l'émetteur-récepteur est caractérisé en ce qu'il comprend un moyen pour classer des porteuses de groupes attribués à des deuxièmes stations de base de cellules présélectionnées dans un secteur déterminé de la cellule donnée et sur des niveaux depuis la cellule donnée inférieurs à un niveau élevé prédéterminé, dans des classes associées respectivement aux niveaux, à des paramètres d'atténuation et à des seuils d'autant plus faibles que les niveaux associés sont éloignés de la cellule donnée, les porteuses dans une classe ayant des puissances de réception en un point situé dans la cellule donnée et dans le secteur déterminé comprises entre le seuil associé à la classe et le seuil précédent, un moyen pour atténuer par un paramètre d'atténuation une puissance prédéterminée pour chaque sous-porteuse à émettre lorsque la sous-porteuse est voisine d'une porteuse appartenant à la classe associée au paramètre d'atténuation, et un moyen pour émettre dans le secteur déterminé les sous-porteuses avec la puissance d'émission prédéterminée autres que lesdites sous-porteuses voisines.

L'invention concerne encore un réseau de radiocommunication à large bande comprenant, en tant que premier réseau, des stations de base à plusieurs secteurs directionnels en tant qu'émetteurs-récepteurs selon l'invention pour émettre des sous-porteuses comprises dans une bande de fréquence dédiée à des liens descendants et ayant des puissances d'émission à adapter à des puissances d'émission de porteuses incluses dans la bande de fréquence dédiée aux liens descendants et aptes à être émises par des stations de base omnidirectionnelles dans un réseau de radiocommunication à bande étroite en tant que deuxième réseau colocalisé avec le réseau à large bande, et des mobiles en tant qu'émetteurs-récepteurs selon l'invention pour émettre d'autres sous-porteuses comprises dans une bande de fréquence dédiée à des liens montants et ayant des puissances d'émission à adapter à des puissances d'émission d'autres porteuses incluses dans la bande de fréquence dédiée aux liens montants et aptes à être émises par des mobiles dans le réseau à bande étroite.

L'invention se rapporte aussi à un programme d'ordinateur apte à être mis en oeuvre dans un émetteur-récepteur. Le programme est caractérisé en ce qu'il comprend des instructions qui, lorsque le programme est exécuté dans l'émetteur-récepteur, réalisent le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels:

- la figure 1 est un schéma de plusieurs motifs d'un réseau de radiocommunication cellulaire à bande étroite;
- la figure 2 est un schéma d'un motif du réseau à bande étroite;
- la figure 3 est un diagramme en temps et fréquence de groupes de porteuses dans une large bande de fréquence réservée à des liens descendants, attribués à des stations de base dans des cellules d'un motif du réseau à bande étroite, une large bande de fréquence réservée à des liens montants étant également représentée;
- la figure 4 est un schéma d'une partie d'un réseau de radiocommunication cellulaire à large bande superposable aux motifs du réseau à bande étroite montrés à la figure 1;
- la figure 5 est un schéma d'une cellule à trois secteurs directionnels du réseau à large bande;
- la figure 6 est un diagramme en temps et fréquence similaire à la figure 3, montrant des sous-bandes de sous-porteuses dans la large bande de fréquence réservée à des liens descendants et disponibles pour chaque secteur des stations de base du réseau à large bande;
- la figure 7 montre schématiquement des émissions dans des secteurs de cellules du réseau à large bande perturbant la réception dans un mobile inclus dans une cellule du réseau à bande étroite;
- la figure 8 montre schématiquement des émissions depuis un secteur d'une cellule du réseau à large bande perturbant la réception dans des cellules du réseau à bande étroite;
- la figure 9 est un algorithme du procédé pour adapter des puissances d'émission de sous-porteuses dans une station de base du réseau à large bande en fonction de la puissance d'émission de porteuse dans les stations de base du réseau à bande étroite, selon une première réalisation;
- la figure 10 est un bloc-diagramme schématique d'une station de base du réseau à large bande selon l'invention pour la mise en oeuvre de la première réalisation du procédé;
- la figure 11 est un diagramme en niveau cellulaire et puissance, des puissances d'émission depuis un secteur d'une station de base du réseau à large bande en fonction de puissances de réception dans la cellule incluant cette station de base, pour des groupes de porteuses attribués à des stations de base dans des cellules du réseau à bande étroite présélectionnées sur des niveaux cellulaires dans le secteur;
- la figure 12 est un algorithme du procédé pour adapter des puissances d'émission de sous-porteuses dans une station de base du réseau à large bande en fonction des puissances de réception dans la cellule incluant la station de base, selon une deuxième réalisation; et
- la figure 13 est un bloc-diagramme schématique d'une station de base du réseau à large bande selon l'invention pour la mise en oeuvre de la deuxième réalisation du procédé.

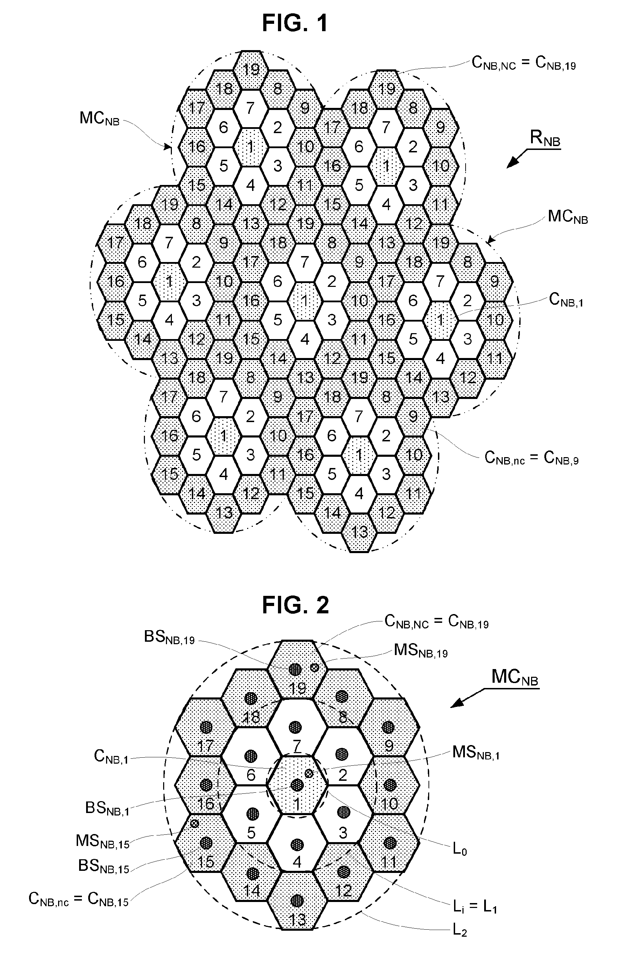

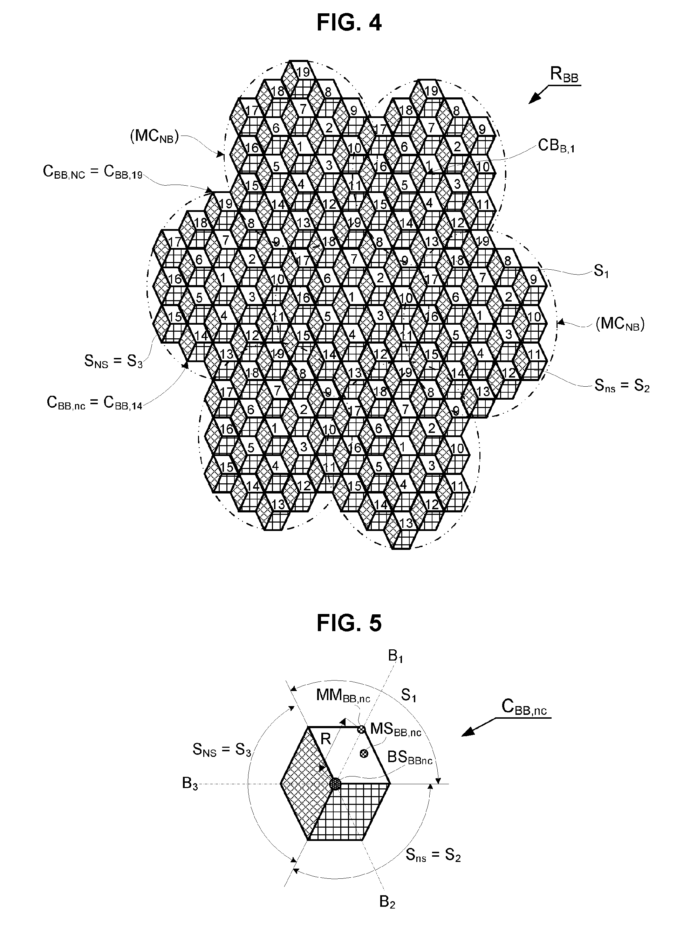

Dans les figures 1 et 4 sont représentées sous la forme d'hexagones théoriques réguliers les cellules radio $C_{NB}$ d'un réseau de radiocommunication cellulaire à bande étroite $R_{NB}$ et les cellules radio $C_{BB}$ d'un réseau de radiocommunication cellulaire à large bande $R_{BB}$. Les réseaux $R_{NB}$ et $R_{BB}$ sont colocalisés ce qui signifie que chaque cellule $C_{NB}$ est superposable à une cellule $C_{BB}$ et une cellule $C_{NB}$-$C_{BB}$ commune aux réseaux comprend centralement une station de base $BS_{NB}$ du réseau $R_{NB}$ et une station de base $BS_{BB}$ du réseau $R_{BB}$ qui sont colocalisées.

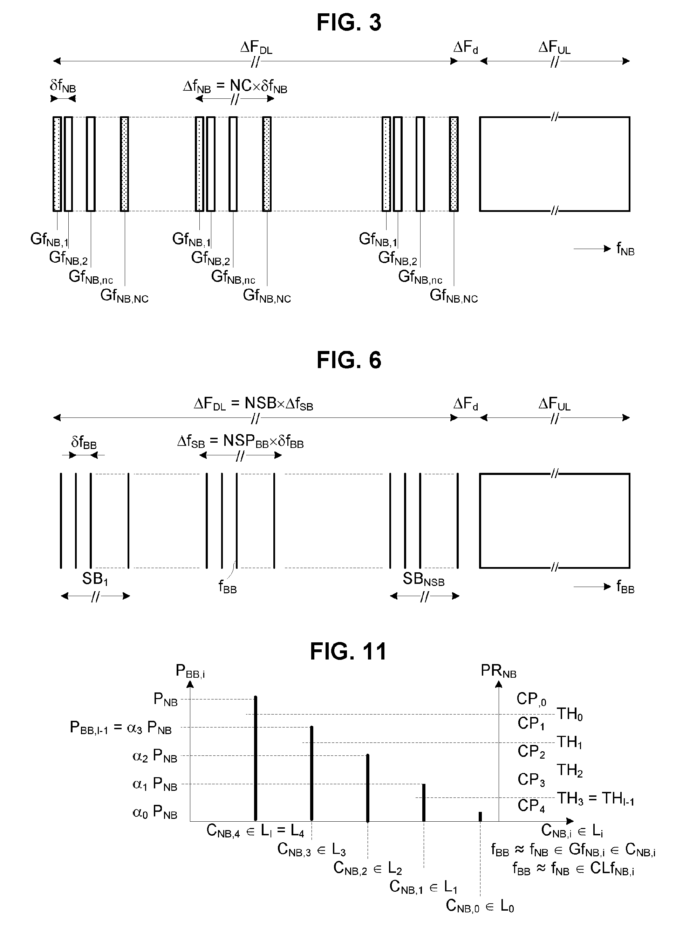

Les réseaux $R_{NB}$ et $R_{BB}$ fonctionnent en mode duplex à division de fréquence FDD ("Frequency Division Duplex" en anglais) dans une large bande de fréquence commune $\Delta F_{DL}$ réservée aux liens descendants et une large bande de fréquence commune $\Delta F_{UL}$ réservée aux liens montants, séparées par un petit intervalle duplex de fréquence $\Delta F_d$, comme montré aux figures 3 et 6. La bande totale ($\Delta F_{DL}$, $\Delta F_{UL}$) est de l'ordre de 1,4 MHz à 20 MHz. A titre d'exemple, l'invention est décrite dans la suite de la description suivant une direction de transmission prédéterminée correspondant à la bande de fréquence $\Delta F_{DL}$ relative à des liens descendants depuis les stations de base $BS_{NB}$ vers des mobiles $MS_{NB}$ dans le réseau $R_{NB}$ et depuis les stations de base $BS_{BB}$ vers des mobiles $MS_{BB}$ dans le réseau $R_{BB}$.

Le réseau à bande étroite $R_{NB}$ ("NarrowBand" en anglais) est par exemple un réseau privé professionnel PMR par exemple du type DMR, TETRA, TETRAPOL ou P25. Il est utilisé pour des services de sécurité publique. es contraintes sécuritaires du réseau à bande étroite $R_{NB}$ imposent que les communications dans ce réseau doivent être établies rapidement et maintenues et ainsi être prioritaires par rapport à des communications dans le réseau à large bande $R_{BB}$. Chaque station de base $BS_{NB}$ du réseau à bande étroite $R_{NB}$ a une antenne omnidirectionnelle et émet des porteuses $f_{NB}$ dans la bande de fréquence $\Delta F_{DL}$ qui peuvent interférer a priori avec des sous-porteuses $f_{BB}$ émises dans la bande de fréquence $\Delta F_{DL}$ par les stations de base $BS_{BB}$ du réseau à large bande $R_{BB}$ situées à proximité de la station de base $BS_{NB}$. A cet effet, l'invention repose sur le principe que les signaux radio transmis dans le réseau à large bande $R_{BB}$ doivent être adaptés en termes de puissance et de fréquence aux signaux radio transmis du réseau à bande étroite $R_{NB}$ pour les perturber le moins possible, c'est-à-dire diminuer le plus possible les interférences entre des porteuses $f_{NB}$ et sous-porteuses $f_{BB}$ voisines attribuées respectivement aux réseaux $R_{NB}$ et $R_{BB}$.

Selon l'exemple montré aux figures 1 et 2, le motif cellulaire de réutilisation $MC_{NB}$ du réseau $R_{NB}$ comprend NC = 19 cellules $C_{NB,1}$ à $C_{NB,NC}$ avec une distance de réutilisation $D_{NB} = \sqrt{3NC}\, R = \sqrt{57}\, R$, ces cellules étant respectivement superposables à NC = 19 cellules $C_{BB,1}$ à $C_{BB,NC}$ du réseau $R_{BB}$. R est la longueur d'un côté d'une cellule hexagonale.

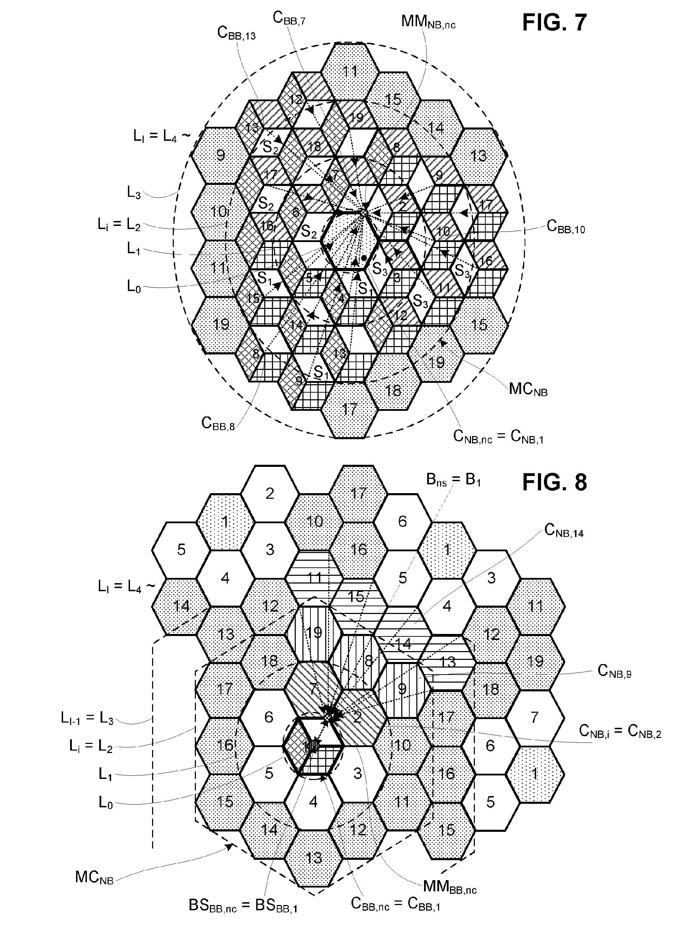

Par convention, la numérotation des cellules dans les figures 1 et 2 est organisée suivant des niveaux concentriques de localisation de cellule $L_0$ à $L_2$ depuis le centre vers la périphérie d'un motif $MC_{NB}$. Le niveau $L_0$ comprend la cellule $C_{NB,1}$ centrale au motif. Le niveau $L_1$ comprend les cellules $C_{NB,2}$ à $C_{NB,7}$ du motif. Le niveau $L_2$ comprend les cellules $C_{NB,8}$ à $C_{NB,NC} = C_{NB,19}$ du motif. Les niveaux $L_0$, $L_1$ et $L_2$ et deux autres niveaux $L_{l-1} = L_3$ et $L_4$ sont également définis pour des cellules dans lesquelles des stations de base $BS_{BB}$ du réseau $R_{BB}$ sont susceptibles de perturber l'émission de la station de base $BS_{NB,1}$ dans la cellule centrale $C_{NB,1}$ du motif $MC_{NB}$ du réseau à bande étroite $R_{NB}$, comme on le verra ci-après. Le niveau $L_3$ montré aux figures 7 et 8 entoure le motif $MC_{NB}$ et comprend des cellules $C_{BB}$ du réseau à large bande $R_{BB}$ appartenant à des motifs voisins du motif $MC_{NB}$. Au delà du niveau $L_3$, un niveau $L_4$ comprend les autres cellules du réseau $R_{NB}$ et notamment les cellules appartenant aux six motifs entourant le motif $MC_{NB}$. Tous les I = 4 niveaux $L_0$ à $L_3$ peuvent être définis par rapport à toute cellule donnée $C_{NB,NC}$ dans le réseau $P_{NB}$.

Les signaux radio émis par les stations de base $BS_{NB}$ des cellules dans le motif $MC_{NB}$ sont supportés par des porteuses $f_{NB}$ régulièrement réparties avec un pas $\delta f_{NB}$ par exemple de 10 kHz ou 12,5 kHz dans la large bande $\Delta F_{DL}$ et une bande étroite utile par porteuse inférieure à $\delta f_{NB}$. Comme montré à la figure 3, la bande $\Delta F_{DL}$ est partagée en NC groupes $Gf_{NB,1}$ à $Gf_{NB,NC}$ de porteuses $f_{NB}$ respectivement attribués aux NC cellules dans le motif du réseau à bande étroite $R_{NB}$. Afin de ne pas surcharger la figure 3, deux porteuses inférieures, une porteuse intermédiaire et une porteuse supérieure sont seulement représentées pour chacun des quatre groupes $Gf_{NB,1}$, $Gf_{NB,2}$, $Gf_{NB,nc}$ et $GF_{NB,NC}$ attribués aux stations de base des cellules $C_{NB,1}$, $C_{NB,2}$, $C_{NB,nc}$ et $C_{NB,NC}$. Les porteuses du groupe $Gf_{NB,nc}$ attribué à une cellule $C_{NB,nc}$ d'un motif $MC_{NB}$, sont entrelacées avec les porteuses des groupes $Gf_{NB,1}$ à $Gf_{NB,nc-1}$ et $Gf_{NB,nc+1}$ à $Gf_{NB,NC}$ attribués aux autres cellules $C_{NB,1}$ à $C_{NB,nc-1}$ et $C_{NB,nc+1}$ à $C_{NB,NC}$ du motif, avec $1 \leq nc \leq NC = 19$. Deux porteuses successives dans le groupe attribué à une cellule sont séparées par un intervalle fréquentiel $\Delta f_{NB} = NC \times \delta F_{NB}$ dans lequel une porteuse de chacun des groupes attribués aux autres cellules est disposée.

Le réseau à large bande $R_{BB}$ ("BroadBand" en anglais) est un réseau pour mobiles de la troisième génération 3GPP ("Third Génération Partnership Project" en anglais) basé par exemple sur la technologie LTE avec une bande de fréquence de 1,4 MHz à 20 MHz. Le réseau $R_{BB}$ supporte des liens descendants radio avec des mobiles du type à accès multiple à multiplexage de fréquences orthogonales OFDMA ("Orthogonal Frequency Division Multiple Access" en anglais) et des liens montants radio avec des mobiles du type à accès multiple à multiplexage de fréquences à unique porteuse SC-FDMA ("Single Carrier Frequency Division Multiple Access" en anglais).

Chaque cellule $C_{BB}$ du réseau à large bande $R_{BB}$ utilise des sous-porteuses $f_{BB}$ uniformément réparties dans la large bande de fréquence $\Delta F_{DL}$ et inclut une station de base $BS_{BB}$ à NS secteurs circulaires $S_1$ à $S_{NS}$ directionnels et disjoints. Selon un exemple auquel on se référera, chaque station de base $BS_{BB}$ est tri-sectorisée et comprend NS = 3 secteurs disjoints de 120° $S_1$, $S_2$ et $S_3$, comme montré à la figure 5. Chaque secteur $S_{ns}$ avec $1 \leq ns \leq NS = 3$ modélise une sous-cellule ayant une zone couverte par une antenne directionnelle reliée à une interface radio respective faisant office d'émetteur-récepteur de la station de base $BS_{BB}$. La sous-cellule est théoriquement limitée par les côtés du secteur au sommet duquel l'interface radio est sensiblement située. Toutes les stations de base $BS_{BB}$ sont identiques et par suite le motif cellulaire de réutilisation dans le réseau $R_{BB}$ est réduit à une cellule $C_{BB}$ et donc le facteur de réutilisation du réseau $R_{BB}$ est égal à 1. La numérotation des cellules $C_{BB}$ est identique à celle des cellules $C_{NB}$ dans un motif du réseau à bande étroite, soit $1 \leq nc \leq NC = 19$.

Dans la suite, il sera considéré que la large bande de fréquence $\Delta F_{DL}$ est attribuée indifféremment à chacun des secteurs $S_1$ à $S_{NS}$ d'une cellule $C_{BB}$ et que l'interface radio de chaque secteur $S_{ns}$ est susceptible d'émettre sur n'importe quelle sous-porteuses $f_{BB}$ dans la bande $\Delta F_{DL}$. Ceci signifie que soit toutes les sous-porteuses $f_{BB}$ attribuées au réseau $R_{BB}$ sont utilisables par chaque secteur d'une cellule, soit des sous-porteuses $f_{BB}$ dans une partie de la bande $\Delta F_{DL}$ sont utilisables par tous les secteurs d'une cellule, ce qui revient à avoir une bande de fréquence commune aux secteurs, et l'autre partie restante de la bande $\Delta F_{DL}$ est divisée en NS parties respectivement attribuées aux NS secteurs.

De manière générale, il sera considéré qu'une station de base $BS_{BB}$ du réseau $R_{BB}$ est du type LTE et peut émettre vers chaque secteur dans n'importe laquelle de sous-bandes disjointes de la large bande $\Delta F_{DL}$. Chacune de ces sous-bandes disjointes supporte par exemple 20 blocs de ressources ou fentes temporelles de 0,5 ms pendant une trame de 10 ms. Par exemple comme montré à la figure 6, la bande de fréquence $\Delta F_{DL}$ comprend NSB sous-bandes de fréquence consécutives $SB_1$ à $SB_{NSB}$ ayant chacune une largeur fréquentielle $\Delta f_{SB} = \Delta F_{DL}/NSB = 180$ kHz d'un bloc de ressource et comprenant chacune $NSP_{BB} = 12$ sous-porteuses consécutives $f_{BB}$ espacées d'un pas $\delta f_{BB} = \Delta f_{SB}/NSP_{BB} = 15$ kHz.

Selon un autre exemple, le réseau à large bande $R_{BB}$ est basé sur la technologie WiMAX mobile. Le réseau $R_{BB}$ supporte des liens descendants et montants radio avec des mobiles du type à accès multiple à multiplexage de fréquences orthogonales OFDMA ("Orthogonal Frequency Division Multiple Access" en anglais). Dans le domaine fréquentiel, un bloc de ressources du réseau LTE est comparable à un bloc de ressources du réseau WiMAX comprenant par exemple 2 clusters chacun s'étalant sur 14 sous-porteuses contiguës de largeur $\delta f = 10,94$ kHz, soit $NSP_{BB} = 28$, et sur une fente temporelle commune de 2 périodes de symbole Ts = 102,9 µs.

Selon d'autres exemples, le nombre NC de cellules dans le motif de réutilisation du réseau $R_{NB}$ est supérieur à 2, le nombre NS de secteurs par station de base $BS_{BB}$ est au moins égal à 2, et le nombre de niveaux par rapport à toute cellule donnée $C_{NB,nc}$ dans le réseau $R_{NB}$ est au moins égal à 2, un niveau pouvant comprendre à la fois des cellules d'un motif et des cellules d'au moins un autre motif voisin. Par exemple pour NC = 4, le deuxième niveau comprend 3 cellules du motif contenant la cellule donnée et 3 cellules respectivement dans 3 motifs voisins du motif.

La comparaison des figures 3 et 6 montre qu'en fonction du rapport des pas fréquentiels $\delta f_{NB}/\delta f_{BB}$, la bande utile d'une sous-porteuse $f_{BB}$ du réseau à large bande chevauche au moins la bande utile d'une porteuse $f_{NB}$ du réseau à bande étroite, voire deux ou plus bandes utiles de porteuses $f_{NB}$. Par conséquent pour une porteuse $f_{NB}$ du groupe attribué à une station de base $BS_{NB}$, des signaux supportés dans des bandes utiles de sous-porteuses $f_{BB}$ recouvrant au moins partiellement la bande utile de la porteuse $f_{NB}$ et émis dans des secteurs de stations de base voisines $BS_{BB}$ orientés vers la station de base $BS_{NB}$ interfèrent avec les signaux supportés par la porteuse $f_{NB}$ de la station de base $BS_{NB}$. Les perturbations causées par une sous-porteuse $f_{BB}$ sont d'autant plus importantes que la puissance de celle-ci reçue dans la cellule $C_{NB}$ de la station de base $BS_{NB}$ est élevée et par conséquent que la distance entre les sites où sont situées une station de base voisine $BS_{BB}$ émettant la sous-porteuse $f_{BB}$ et la station de base $BS_{NB}$ est petite.

Comme il est connu, la puissance reçue en un point de mesure donné à une distance D d'une station de base émettant une puissance d'émission $P_{NB}$ est proportionnelle à $P_{NB}/D^\gamma$ où $\gamma$ désigne une constante de propagation dans les réseaux comprise entre 3 environ et 4 environ et dépendant des conditions de propagation radio entre la station de base et le point de mesure. Dans la suite de la description, $P_{NB}$ désigne une puissance d'émission prédéterminée pour chaque porteuse $f_{NB}$ à émettre par une station de base $BS_{NB}$ ou pour chaque sous-porteuse $f_{BB}$ à émettre par une station de base $BS_{BB}$ lorsque la sous-porteuse émise $f_{BB}$ est considérée comme ne perturbant pas la réception dans le réseau à bande étroite $R_{NB}$.

L'invention repose sur l'évaluation des perturbations des signaux émis par des stations de base $BS_{BB}$ du réseau à large bande $R_{BB}$ sur des signaux reçus par un mobile, dit mobile de mesure de puissance $MM_{NB,nc}$, dans une cellule $C_{NB,nc}$ du réseau à bande étroite $R_{NB}$ et en particulier sur chacune des porteuses $f_{NB}$ du groupe $Gf_{NB,nc}$ attribué à la station de base $BS_{NB,nc}$ de la cellule $C_{NB,nc}$ afin d'en déduire les puissances que doivent émettre les stations de base $BS_{BB}$ pour les sous-porteuses $f_{BB}$ interférant avec la porteuse $f_{NB}$.

Comme montré à la figure 7, le mobile de mesure $MM_{NB,nc}$ est supposé positionné en bordure d'une cellule donnée $C_{NB,nc}$, par exemple de la cellule centrale $C_{NB,1}$ du motif $MC_{NB}$, sur la bissectrice de l'un des trois secteurs $S_1$ à $S_{NS}$ de la cellule $C_{BB,1}$, par exemple sur la bissectrice $B_1$ du secteur droit supérieur $S_1$ montré à plus grande échelle à la figure 5. Le mobile de mesure est ainsi localisé en un point de mesure le plus éloigné du centre de la cellule $C_{BB,1}$ où les perturbations des cellules voisines $C_{NB,7}$ et $C_{NB,2}$ sont maximales, soit à une distance R de la station de base $BS_{NB,1}$ au centre de la cellule $C_{NB,1}$.

La dégradation de la réception dans le mobile de mesure $MM_{NB,nc}$ dues aux émissions dans le réseau à large bande $R_{BB}$ est évaluée pour une sélection de secteurs des cellules $C_{BB}$ du réseau $R_{BB}$ dont les puissances d'émission sont considérées comme suffisamment élevées pour perturber les signaux reçus et donc ont des orientations de leurs diagrammes de rayonnement prépondérantes vers le mobile $MM_{NB,nc}$ et des distances de quelques niveaux cellulaires au mobile $MM_{NB,nc}$. Comme montré à la figure 7, les secteurs des cellules $C_{BB}$ du réseau $R_{BB}$ perturbant la réception du mobile $MM_{NB,nc}$ sont sélectionnés sur les niveaux $L_0$ à $L_3$. Le mobile de mesure est insensible aux puissances d'émission des stations de base éloignées $BS_{BB}$ au-delà du niveau $L_3$.

En revanche, le mobile de mesure $MM_{NB,nc}$ est sensible aux puissances d'émission des stations de base $BS_{NB}$ dans les cellules centrales $C_{NB,1}$ du réseau à bande étroite $R_{NB}$ appartenant aux six motifs voisins et incluses dans le niveau global éloigné $L_4$. En l'absence du réseau à large bande $R_{BB}$, le rapport porteuse sur interférence $(C/I)_{NB}$ ("Carrier-to-Interference ratio" en anglais) relatif à une porteuse donnée $f_{NB}$ ayant la puissance d'émission prédéterminée $P_{NB}$ et appartenant au groupe $Gf_{NB,1}$ attribué à la cellule donnée $C_{NB,nc} = C_{NB,1}$ est:

$$(C/I)_{NB} = (P_{NB}/R^\gamma)/(6\ P_{NB}/D_{NB}{}^\gamma) = D_{NB}{}^\gamma/(6\ R^\gamma),$$

où

R est la distance entre la station de base $BS_{NB,1}$ au centre de la cellule $C_{NB,1}$ et le mobile de mesure $MM_{NB,nc}$ à un sommet de la cellule $C_{NB,1}$,

$(P_{NB}/R^\gamma)$ est la puissance de la station de base $BS_{NB,1}$ pour la porteuse donnée $f_{NB}$ reçue par le mobile de mesure,

$D_{NB} = \sqrt{57}$ R est la distance moyenne entre le mobile de mesure et les stations de base dans les cellules centrales $C_{NB,1}$ des six motifs voisins, et

$(P_{NB}/D_{NB}{}^\gamma)$ est la puissance de l'une des six stations de base précédentes $BS_{NB,1}$ reçue par le mobile de mesure.

La puissance perturbatrice de la porteuse donnée $f_{NB}$ apportée par les $NS_i$ secteurs sélectionnés des cellules $C_{BB}$ du réseau à large bande $R_{BB}$ sur chacun $L_i$ des niveaux $L_0$ à $L_3$ perturbant la réception dans le mobile de mesure $MM_{NB,nc}$, avec $0 \leq i \leq I - 1 = 3$, est $NS_i\ \alpha_i\ P_{NB}/D_i{}^\gamma$. $\alpha_i$ est un paramètre d'atténuation de la puissance d'émission de la station de base $BS_{BB}$ pour le secteur sélectionné des cellules $C_{BB}$ sur le niveau $L_i$, $\alpha_i$ étant compris entre 0 et 1. $D_i$ est la distance moyenne entre le mobile de mesure $MM_{NB,nc}$ et l'une des stations de base $BS_{NB}$ dans les cellules sur le niveau $L_i$ dont $NS_i$ secteurs sont sélectionnés, le mobile de mesure $MM_{NB,nc}$ étant ainsi localisé en un point de mesure dans la cellule $C_{NB,1}$ le plus éloigné en moyenne des centres des cellules ayant un secteur sélectionné de même orientation $S_{nc}$ sur le niveau respectif $L_i$. $P_{NB}/D_i^\gamma$ est la puissance de l'interface radio dans un secteur sélectionné de l'une des stations de base précédentes $BS_{NB}$ pour une sous-porteuse $f_{BB}$ voisine de la porteuse donnée $f_{NB}$ et perturbant la réception de la porteuse donnée $f_{NB}$ dans le mobile de mesure $MM_{NB,nc}$.

Les secteurs sélectionnés perturbant la réception de porteuses dans le mobile de mesure $MM_{NB,nc}$ pour chacun des niveaux concentriques $L_0$ à $L_3$ sont illustrés par des quadrilatères sans hachures dans la figure 7 et sont les suivants pour la cellule donnée $C_{NB,nc} = C_{NB,1}$ :

au niveau $L_0$, le seul secteur $S_1$ de la station de base $BS_{BB,1}$ dans la cellule $C_{NB,1}$ contenant mobile de mesure $MM_{NB,nc}$ et située à une distance $D_0 = R$, soit $NS_0 = 1$;

au niveau $L_1$, les secteurs $S_1$ dans les cellules $C_{NB,4}$ et $C_{NB,5}$, les secteurs $S_2$ dans les cellules $C_{NB,6}$ et $C_{NB,7}$ et les secteurs $S_3$ dans les cellules $C_{NB,2}$ et $C_{NB,3}$ orientés vers la cellule $C_{NB,1}$ et provenant de stations de base $BS_{BB}$

situées à une distance moyenne $D_1 = \sqrt{3}\ R$ du mobile de mesure $MS_{NB}$, soit $NS_1 = 6$;

au niveau $L_2$, les secteurs $S_1$ des cellules $C_{NB,13}$, $C_{NB,14}$ et $C_{NB,15}$, les secteurs $S_2$ des cellules $C_{NB,17}$, $C_{NB,18}$ et $C_{NB,19}$, et les secteurs $S_3$ des cellules $C_{NB,9}$, $C_{NB,10}$ et $C_{NB,11}$ couvrant la cellule $C_{NB,1}$ et provenant de stations de base $BS_{BB}$ situées à une distance moyenne $D_2 = 3R$ du mobile de mesure $MM_{NB,nc}$, soit $NS_2 = 9$; et

au niveau $L_3$, les secteurs $S_1$ des cellules $C_{NB,8}$ et $C_{NB,9}$, les secteurs $S_2$ des cellules $C_{NB,12}$ et $C_{NB,13}$ et les secteurs $S_3$ des cellules $C_{NB,16}$ et $C_{NB,17}$ ayant un demi-secteur central de 60° couvrant la cellule $C_{NB,1}$; ces $NS_3 = 6$ cellules appartiennent à trois motifs voisins à la périphérie du motif $MC_{NB}$, comme montré dans les figures 1, 4 et 7, et incluent des stations de base $BS_{BB}$ situées à une distance moyenne $D_3 = 4R$ du mobile de mesure $MM_{NB,nc}$.

Tous les $NC \times NS - (1 + 6 + 9) = 41$ autres secteurs du motif central $MC_{NB}$ et les $(17 \times 3)- NS_3 = 45$ autres secteurs sur le niveau $L_3$ sont orientés suivant des directions divergentes par rapport à la cellule donnée $C_{NB,nc} = C_{NB,1}$ et/ou sont trop éloignés de la cellule donnée pour perturber suffisamment la réception dans le mobile de mesure $MM_{NB,nc}$.

Le rapport porteuse sur interférence $(C/I)_{NB\_BB}$ dans le mobile de mesure $MM_{NB,nc}$ relatif à une porteuse $f_{NB}$ ayant une puissance d'émission $P_{NB}$ perturbée par la même porteuse $f_{NB}$ émise par les stations de base $BS_{NB}$ dans les cellules $C_{NB,nc} = C_{NB,1}$ du réseau à bande étroite $R_{NB}$ appartenant aux six motifs voisins et par des sous-porteuses voisines $f_{BB}$ émises par les secteurs des stations de base $BS_{BB}$ sélectionnés sur les niveaux $L_0$ à $L_3$ est le suivant, en supposant que toutes ces porteuses et sous-porteuses sont émises avec une puissance égale $P_{NB}$:

$$(C/I)_{NB\_BB} = (P_{NB}/R^\gamma)/(6\ P_{NB}/D_{NB}^\gamma + \sum_{i=0}^{i=I-1} NS_i\ \alpha_i\ P_{NB}/D_i^\gamma),$$

avec $\sum_{i=0}^{i=I-1} NS_i\ \alpha_i\ P_{NB}/D_i^\gamma = \alpha_0\ P_{NB}/D_0^\gamma + 6\ \alpha_1\ P_{NB}/D_1^\gamma + 9\ \alpha_2\ P_{NB}/D_2^\gamma + 6\ \alpha_3\ P_{NB}/D_3^\gamma$.

En supposant qu'une dégradation minimale du rapport porteuse sur interférence $\alpha_{cible}\ (C/I)_{NB} = (C/I)_{NB-BB}$ à la réception dans le mobile de mesure $MM_{NB,nc}$ dans la cellule donnée $C_{NB,nc}$ due aux émissions perturbatrices est acceptable pour une atténuation prédéterminée $\alpha_{cible}$, la relation suivante entre les paramètres d'atténuation est déduite

$$\alpha_{cible} = 1/[1 + (\sum_{i=0}^{i=I-1} (NS_i\ \alpha_i/D_i^\gamma)D_{NB}^\gamma/6\ ], \tag{1}$$

et devient en indiquant les nombres de cellule $NS_i$:

$$\alpha_0/D_0^\gamma + 6\ \alpha_1/D_1^\gamma + 9\ \alpha_2/D_2^\gamma + 6\ \alpha_3/D_3^\gamma = 6(1 - \alpha_{cible})/(D_{NB}^\gamma\ \alpha_{cible}).$$

Selon une réalisation, chaque paramètre d'atténuation $\alpha_i$ avec $0 \le i \le I - 1 = 3$ est considéré comme proportionnel à la distance moyenne $D_i$ entre le mobile de mesure $MM_{NB,nc}$ dans la cellule donnée $C_{NB,nc}$ et les stations de base $BS_{BB}$ dans les cellules $C_{BB}$ ayant un secteur sélectionné sur le niveau $L_i$, sachant que pour une puissance d'émission donnée, la puissance de réception est proportionnelle au rapport $\alpha_i/D_i^\gamma$. Par exemple, chaque paramètre $\alpha_i$ est donné par la formule suivante:

$$\alpha_i = k\ D_i^\gamma/D_{NB}^\gamma, \tag{2}$$

dans laquelle k est un facteur fonction de l'atténuation prédéterminée visée $\alpha_{cible}$:

$$(1 + 6 + 9 + 6)\,(k/D_{NB}{}^\gamma) = 6(1 - \alpha_{cible})/(D_{NB}{}^\gamma\,\alpha_{cible}), \qquad\qquad (3)$$

soit $k = 3(1 - \alpha_{cible})/(11\,\alpha_{cible})$.

Par exemple, si $\alpha_{cible} = -1$ dB, alors $k = 0,07$, et pour une constante de propagation $y = 4$ des réseaux en milieu urbain, les paramètres d'atténuation valent $\alpha_0 \cong -50$ dB, $\alpha_1 \cong -40$ dB, $\alpha_2 \cong -30$ dB et $\alpha_3 \cong -20$ dB. Le paramètre d'atténuation $\alpha_i$ est d'autant plus faible que la puissance de la station de base perturbatrice $BS_{BB}$ est proche de la la cellule donnée $C_{NB,nc}$ et donc que la distance $D_i$ est courte, soit $\alpha_0 < \alpha_1 < \alpha_2 < \alpha_3$.

Selon un autre exemple, les secteurs sélectionnés dans les cellules $C_{BB}$ sur les niveaux $L_0$ et $L_1$ produisent une dégradation très élevée sur la réception dans la cellule donnée $C_{NB,nc}$ et par conséquent les paramètres $\alpha_0$ et $\alpha_1$ sont égaux à 0. Dans cet exemple, la relation (3) devient:

$$(9 + 6\,)\,(k/D_{NB}{}^\gamma) = 6(1 - \alpha_{cible})/(D_{NB}{}^\gamma\,\alpha_{cible}),$$

soit

$$k = 3(1 - \alpha_{cible})/(5\,\alpha_{cible}) = 0,1 \text{ pour } \alpha_{cible} = -1 \text{ dB}.$$

Les paramètres d'atténuation sont $\alpha_2 \cong -20$ dB et $\alpha_3 \cong -25$ dB pour $\gamma = 4$.

L'adaptation des puissances d'émission de sous-porteuses $f_{BB}$ émises dans la large bande de fréquence commune $\Delta F_{DL}$ par un secteur déterminé $S_{ns}$ d'une station de base $BS_{BB,nc}$ dans une cellule donnée $C_{BB,nc}$ est maintenant déduite de l'évaluation ci-dessus des perturbations de sous-porteuses $f_{BB}$ émises par des stations de base $BS_{BB}$ et voisines d'une porteuse $f_{NB}$ sur la réception de celle-ci dans une cellule $C_{NB}$ du réseau à bande étroite $R_{NB}$. L'invention considère pour cette adaptation que la réception d'une sous-porteuse $f_{BB}$ par un mobile de mesure $MS_{BB,nc}$ du réseau $R_{BB}$ dans le secteur déterminé $S_{ns}$ de la cellule donnée $C_{BB,nc}$ peut être perturbée a priori par n'importe quelle porteuse $f_{NB}$ comprise dans un intervalle fréquentiel $\Delta f_{NB} = NC \times \delta f_{NB}$ centré sur la sous-porteuse $f_{BB}$ et donc a priori par l'une des porteuses $f_{NB}$ de chacun des NC groupes $Gf_{NB,1}$ à $Gf_{NB,NC}$ de porteuses $f_{NB}$ respectivement attribués aux NC cellules dans le motif du réseau à bande étroite $R_{NB}$. Pour le secteur déterminé $S_{ns}$ de la cellule donnée $C_{BB,nc}$ du réseau à large bande, des stations de base $BS_{NB}$ localisées en vision du secteur déterminé $S_{ns}$ et perturbées par l'émission de la station de base $BS_{BB,nc}$ dans le secteur $S_{ns}$ sont présélectionnées sur des niveaux concentriques de localisation de cellule $L_0$ à $L_3 = L_{I-1}$ depuis le centre de la cellule donnée $C_{BB,nc}$ vers la périphérie du motif centré sur celle-ci.

On se référera par exemple au secteur déterminé $S_{ns} = S_1$ de la cellule donnée $C_{BB,nc} = C_{BB,1}$ d'un motif comme montré à la figure 8.

Pour le secteur déterminé $S_{ns}$ de la cellule donnée $B_{BB,nc}$ du réseau à large bande, un rapport porteuse sur interférence $(C/I)_{NB\_BB,i}$ est évalué pour chaque sous-porteuse $f_{BB}$ et pour chaque niveau $L_i$ depuis la cellule $C_{BB,nc}$, avec $0 \le i \le I - 1 = 3$. Les rapports porteuse sur interférence sont évalués dans le mobile de mesure $MM_{BB,nc}$ qui est situé sur la bissectrice $B_{nc}$ du secteur $S_{nc}$ à une distance $D_0 = R$ de la station de base $BS_{BB,nc}$, et où les perturbations des secteurs $S_3$ et $S_2$ des cellules voisines $C_{BB,2}$ et $C_{BB,7}$ sont maximales.

Soit $P_{BB,i} = \alpha_i P_{NB}$ la puissance d'émission de la station de base $BS_{BB,nc}$ pour une sous-porteuse $f_{BB}$ dont la réception est perturbée par une porteuse $f_{NB}$ appartenant à une classe $CP_i$ de porteuses attribuées à des cellules $C_{NB,i}$ sur le niveau $L_i$. De ce qui précède, la puissance d'émission $P_{NB}$ prévue initialement pour la sous-porteuse $f_{BB}$ doit être atténuée du paramètre d'atténuation ($\alpha_i$ pour peu perturber la réception dans les cellules $C_{NB,i}$ sur le niveau $L_i$ afin de maintenir l'atténuation prédéterminée $\alpha_{cible}$ dans les cellules du réseau à bande étroite.

Le mobile de mesure $MM_{BB,nc}$ reçoit une puissance de réception $P_{BB,i}/R^\gamma$ de la station de base $BS_{BB,nc} = BS_{BB,1}$ qui, en l'absence du réseau à bande étroite $R_{BB}$, n'est perturbée que par les puissances de réception $P_{BB}/R^\gamma$ dues aux puissances d'émission $P_{BB,i}$ dans les deux secteurs $S_3$ et $S_2$ des deux cellules voisines $C_{BB,2}$ et $C_{BB,7}$ considérées comme situées sur le niveau $L_0$ pour le mobile de mesure $MM_{BB,nc}$ et en vision du secteur déterminé $S_{ns} = S_1$ de la cellule donnée $C_{BB,nc} = C_{BB,1}$. Dans ce cas, comme pour tout niveau $L_4$ au delà du niveau $L_{I-1} = L_3$ sur lequel les cellules du réseau à bande étroite $R_{NB}$ sont trop éloignées de la cellule donnée $C_{BB,nc}$ pour perturber la réception dans celle-ci, le rapport porteuse sur interférence $(C/I)_{NB\_BB,I}$ avec $I = 4$ est le suivant:

$$(C/I)_{NB\_BB,I} = (P_{NB}/R^\gamma)/(2\,P_{NB}/R^\gamma) = 1/2, \text{ soit } -3 \text{ dB}.$$

De plus, la réception d'une sous-porteuse $f_{BB}$ dans le mobile de mesure $MM_{BB,nc}$ est perturbée par les puissances de réception $P_{NB}/D_i{}^\gamma$ dues aux puissances d'émission $P_{NB}$ de porteuses perturbatrices $f_{NB}$ dans des groupes $Gf_{NB,i}$ attribuées à des stations de base $BS_{NB,i}$ dans au plus $NC_{NB,i} = (i + 1)$ cellules présélectionnées $C_{NB}$ du réseau à bande étroite qui sont situées sur le niveau $L_i$ ayant un rang $i + 1$ tel que $1 \leq i + 1 \leq I = 4$ compté depuis la cellule donnée $C_{BB,nc}$. L'ensemble des cellules présélectionnées sur le niveau $L_i$ est symétrique par rapport à la bissectrice $B_{ns} = B_1$ du secteur déterminé $S_{ns} = S_1$ de la cellule donnée $C_{BB,nc}$ et est contenu dans le secteur déterminé. Le mobile de mesure $MM_{BB,nc}$ est ainsi localisé dans le secteur $S_{ns}$ et dans la cellule $C_{BB,nc}$ en un point de mesure le plus proche en moyenne des centres des cellules présélectionnées $C_{NB,i}$ sur un niveau $L_i$. Selon l'exemple précédent, les cellules perturbatrices présélectionnées $C_{NB,i}$ dans le secteur $S_{ns} = S_1$ de la cellule donnée $C_{BB,nc} = C_{BB,1}$ sont l'unique cellule $C_{NB,1}$ ($NC_{NB,0} = 1$) située sur le premier niveau $L_0$ et colocalisée avec la cellule $C_{BB,1}$, les $NC_{NB,1} = 2$ cellules $C_{NB,2}$ et $C_{NB,7}$ situées sur le deuxième niveau $L_1$, les $NC_{NB,2} = 3$ cellules $C_{NB,9}$, $C_{NB,8}$ et $C_{NB,19}$ situées sur le troisième niveau $L_2$, et les $NC_{NB,3} = 4$ cellules $C_{NB,13}$, $C_{NB,14}$, $C_{NB,15}$ et $C_{NB,11}$ situées sur le quatrième niveau $L_3$ et à la périphérie de motifs voisins. En variante, pour le quatrième niveau $L_3$, seulement les 2 cellules perturbatrices $C_{NB,14}$ et $C_{NB,15}$ proches de la bissectrice $B_1$ du secteur déterminé $S_1$ peuvent être présélectionnées, les cellules $C_{NB,13}$ et $C_{NB,11}$ étant considérées comme trop éloignées de la cellule $C_{BB,1}$ pour perturber la réception de sous-porteuses $f_{BB}$ dans le mobile de mesure $MM_{BB,nc}$. Globalement, le nombre des groupes de porteuses $GF_{NB,0}$ à $Gf_{NB,I-1} = Gf_{NB,3}$ du réseau à bande étroite $R_{NB}$ perturbant la réception dans un secteur de chaque cellule du réseau à large bande $R_{BB}$ est $NGf_{NB} = I(I + 1)/2 = 10$ parmi les $NC = 19$ groupes de fréquences du réseau $R_{NB}$.

Dans le mobile de mesure $MM_{BB,nc}$, la contribution des diverses puissances de réception précitées pour le niveau $L_i$ dans le rapport porteuse sur interférence $(C/I)_{NB\_BB,i}$ pour une sous-porteuse $f_{BB}$ est la suivante:

$$(C/I)_{NB\_BB,i} = (P_{BB,i}/R^\gamma)/[(2\ P_{BB,i}/R^\gamma) + (i + 1)P_{NB}/D_{I-i}{}^\gamma].$$

En remplaçant la puissance $P_{BB,i}$ par $\alpha_i P_{NB}$, le rapport porteuse sur interférence s'écrit:

$$(C/I)_{NB\_BB,i} = (\alpha_i/R^\gamma)/[(2\ \alpha_i/R^\gamma) + (i + 1)/D_i{}^\gamma],$$

soit $(C/I)_{NB\_BB,i} = \beta_{BB,i}/2 = \beta_{BB,i}\ (C/I)_{NB\_BB,I}$
avec $\beta_{BB,i} = 1/[1 + (i + 1)R^\gamma/(2\ \alpha_i\ D_i{}^\gamma)]$.

En utilisant la formule précédente $\alpha_i = k\ D_i{}^\gamma/D_{NB}{}^\gamma$ pour le paramètre d'atténuation de puissance d'émission de la station de base $BS_{BB,nc}$ par rapport aux cellules présélectionnées $C_{NB,i}$ sur le niveau $L_i$, le paramètre $\beta_{BB,i}$ représentatif de la dégradation de la sous-porteuse $f_{BB}$ par des porteuses $f_{NB}$ émises depuis le niveau $L_i$ devient:

$$\beta_{BB,i} = 1/[1 + (i + 1)(D_{NB}\ R)^\gamma/(2\ k\ D_i{}^{2\gamma})].$$

Pour un milieu de propagation urbain avec $\gamma = 4$ et le facteur $k = 0{,}07$ établi précédemment et correspondant à l'atténuation prédéterminée $\alpha_{cible} = -1$ dB pour une dégradation acceptable du rapport porteuse sur interférence dans les cellules $C_{NB}$ du réseau à bande étroite, les paramètres de dégradation $\beta_{BB,i}$ pour les niveaux $L_0$ à $L_3$ sont $\beta_{BB,0} \cong -45$ dB, $\beta_{BB,1} \cong -30$ dB, $\beta_{BB,2} \cong -10$ dB, et $\beta_{BB,3} \cong -4$ dB. Au delà de ces niveaux, la dégradation est négligeable, soit $\beta_{BB,4} \cong 0$ dB.

Les paramètres de dégradation $\beta_{BB,0}$ et $\beta_{BB,1}$ étant inférieurs à $10^{-3}$, les paramètres atténuations $\alpha_0$ et $\alpha_1$ devant être appliqués aux puissances d'émission des sous-porteuses $f_{BB}$ proches de porteuses des groupes $Gf_{NB,0}$ et $Gf_{NB,1}$ sont donc très faibles et par conséquent ces sous-porteuses $f_{BB}$ deviennent inutilisables dans la station de base $BS_{BB,nc}$ de la cellule donnée $C_{BB,nc}$. Selon une réalisation, les sous-porteuses $f_{BB}$ voisines des porteuses des groupes $Gf_{NB,0}$ et $GF_{NB,1}$ ne sont pas émises par la station de base $BS_{BB,nc}$ et aucune puissance de réception n'est mesurée dans le mobile de mesure $MM_{BB,nc}$ pour ces sous-porteuses voisines $f_{BB}$. Les groupes $Gf_{NB,0}$ et $Gf_{NB,1}$ ne représentent que $(1 + 2)/NC \cong 15{,}8\%$ des groupes de fréquences du réseau $R_{NB}$. Les sous-porteuses $f_{BB}$ voisines des porteuses des autres groupes $Gf_{NB,2}$ et $Gf_{NB,3}$ et toutes les autres sous-porteuses $f_{BB}$ pour lesquelles aucune dégradation n'est perceptible à la réception dans la cellule donnée $C_{BB,nc}$ sont utilisables dans la station de base $BS_{BB,nc}$ et représentent $(NC - 3)/NC \cong 84{,}2\ \%$ des groupes de fréquences du réseau $R_{NB}$.

Par exemple, pour une sous-bande de fréquence $SB_{BB}$ du réseau à large bande $R_{BB}$ comportant $NSP_{BB} = 12$ sous-porteuses $f_{BB}$ sur une largeur fréquentielle $\Delta f_{SB} = NSP_{BB} \times \delta f_{BB} = 12 \times 15 = 180$ kHz d'un bloc de ressource et pour une répartition uniforme de $NC = 19$ porteuses $f_{NB}$ dans la sous-bande de fréquence $SB_{BB}$, à raison d'une porteuse $f_{NB}$ par groupe de porteuses, au moins $NSP_{BB} - (1 + 2) = 9$ sous-porteuses $f_{BB}$ sont disponibles dans chaque sous-bande de fréquence $SB_{BB}$ pour chaque secteur de cellule du réseau $R_{BB}$. Les 9 sous-porteuses disponibles $f_{BB}$ sont classées en trois classes $CP_2$, $CP_3$ et $CP_4$. La classe $CP_2$ comprend $NSP_{NB,2}$ = 2 sous-porteuses $f_{BB}$ ayant chacune une bande de fréquence $\delta f_{BB}$ = 15 kHz qui est recouverte au moins partiellement par la bande de fréquence $\delta f_{NB}$ = 180/19 kHz d'au moins l'une des porteuses $f_{NB}$ émises dans $NC_{NB,2}$ = 3 cellules perturbatrices $C_{NB}$ sur le niveau $L_2$. La classe $CP_3$ comprend $NSP_{NB,3}$ = 3 sous-porteuses $f_{BB}$ ayant chacune une bande de fréquence $\delta f_{BB}$ qui est recouverte au moins partiellement par la bande de fréquence $\delta F_{NB}$ d'au moins l'une des porteuses $f_{NB}$ émises dans $NC_{NB,3}$ = 4 cellules perturbatrices $C_{NB}$ sur le niveau $L_3$. La classe $CP_4$ comprend $NSP_{NB,4}$ = 4 sous-porteuses $f_{BB}$ parmi les NC - $NGf_{NB}$ = 19 - 12 = 7 cellules restantes $C_{NB}$ considérées non perturbatrices dans le motif centré sur la cellule donnée $C_{BB,nc}$.

En pratique, pour un rapport porteuse sur interférence initial $(C/I)_{NB\_BB,I}$ = - 3 dB, le rapport porteuse à interférence global dans une station de base du réseau à large bande $R_{BB}$ colocalisé avec le réseau à bande étroite $R_{NB}$ est de l'ordre de -6 dB à -8 dB.

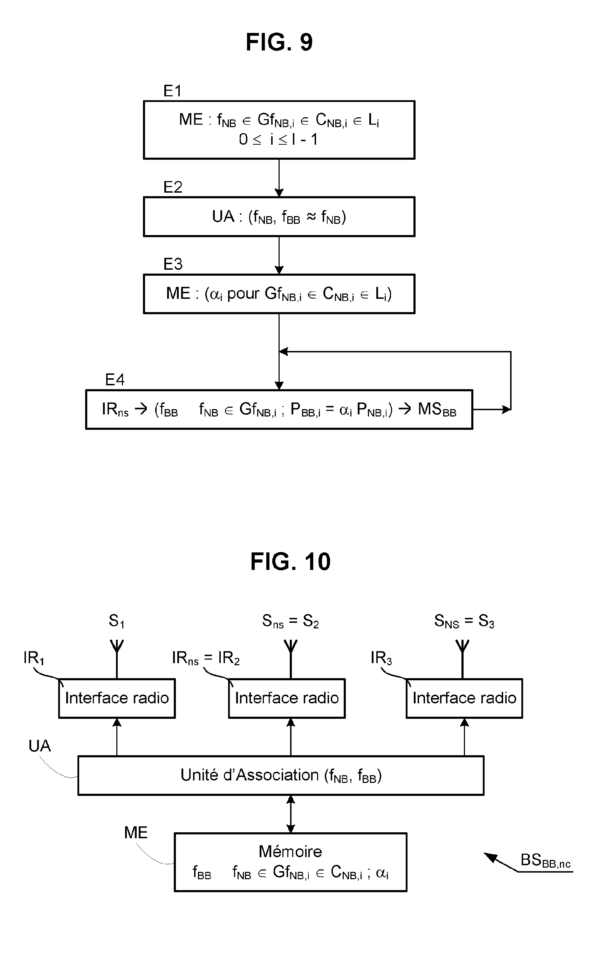

Selon une première réalisation de l'invention, le procédé d'adaptation de puissances de sous-porteuses comprend des étapes préalables E1 à E3 et une étape répétitive E4 montrées à la figure 9. Ces étapes sont exécutées dans une station de base $BS_{BB,nc}$ d'une cellule donnée $C_{BB,nc}$ du réseau à large bande $R_{BB}$ et pour un secteur déterminé $S_{ns}$ de la station de base $BS_{BB,nc}$. Le procédé est également exécuté d'une manière similaire pour chacun des secteurs de chacune des stations de base du réseau à large bande.

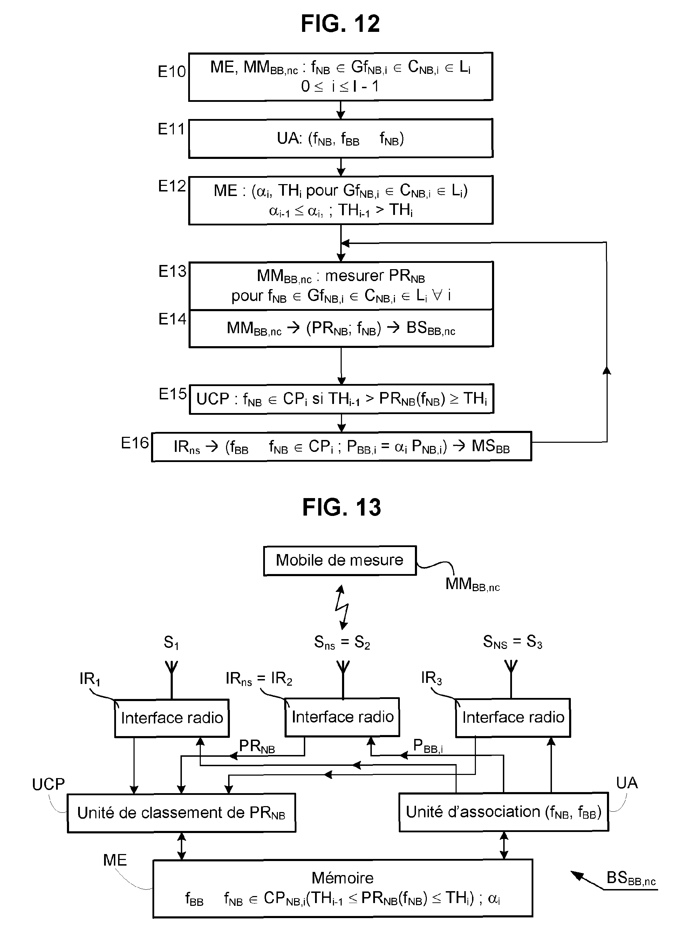

Pour cette première réalisation de l'invention, une station de base $BS_{BB,nc}$ du réseau à large bande $R_{BB}$ comprend notamment NS interfaces radio $IR_{ns}$ pour les secteurs $S_{ns}$ comportant chacune un émetteur-récepteur notamment pour émettre des sous-porteuses $f_{BB}$ dans la large bande de fréquence $\Delta F_{DL}$ pour liens descendants et recevoir des sous-porteuses dans la large bande de fréquence $\Delta F_{UL}$ pour liens montants, une mémoire programmable ME, et une unité d'association de porteuses et sous-porteuses UA, comme représenté à la figure 10. Dans la station de base $BS_{BB,nc}$ montrée dans la figure 10, ou dans la figure 13 décrite plus loin, sont seulement représentés des blocs fonctionnels assurant des fonctions ayant un lien avec l'invention. Certains de ces blocs fonctionnels peuvent correspondre à des modules de programme d'ordinateur implémentés dans au moins un processeur et/ou à des modules matériels dédiés ou programmables.

A l'étape E1, dans la mémoire ME de la station de base $BS_{BB,nc}$ sont enregistrés des groupes $Gf_{NB,i}$ de porteuses d'émission $f_{NB}$ attribués à des stations de base $BS_{NB}$ dans des cellules présélectionnées $C_{NB,i}$ localisées sur les niveaux cellulaires $L_i$, avec $0 \leq i \leq I - 1 = 3$, en considérant les niveaux selon leur rang croissant depuis la cellule $C_{BB}$ incluant la station de base $BS_{BB,nc}$ au premier niveau $L_0$. Comme montré à la figure 8 par exemple pour la station de base $BS_{BB,nc}$ = $BS_{BB,1}$ localisée dans la cellule donnée $C_{BB,nc}$ = $C_{BB,1}$ d'un motif $MC_{NB}$ du réseau à bande étroite $R_{NB}$, la cellule $C_{BB,1}$, les cellules $C_{NB,2}$ et $C_{NB,7}$, les cellules $C_{NB,9}$, $C_{NB,8}$ et $C_{NB,19}$, et au moins les cellules $C_{NB,14}$ et $C_{NB,15}$ sont présélectionnées respectivement sur les niveaux cellulaires $L_0$ à $L_3$. Les porteuses $f_{NB}$ des groupes $Gf_{NB,i}$ attribués aux cellules présélectionnées $C_{NB,i}$ sont susceptibles d'interférer avec des porteuses $f_{BB}$ émises par la station de base $BS_{BB,nc}$ dans le secteur $S_{ns}$. L'enregistrement des porteuses d'émission $f_{NB}$ permet de les coupler automatiquement à des sous-porteuses d'émission $f_{BB}$ de la station de base $BS_{BB,nc}$ à l'étape suivante E2 et ainsi d'adapter l'émission dans les secteurs du réseau à large bande à l'émission dans les cellules du réseau à bande étroite lorsque les porteuses du réseau à bande étroite sont modifiées.

A l'étape E2, l'unité d'association de porteuses et sous-porteuses UA dans la station de base $BS_{BB,nc}$ associe chaque porteuse $f_{NB}$ attribuée à une cellule présélectionnée $C_{NB,i}$ à une sous-porteuse d'émission $f_{BB}$ de la station de base $BS_{BB,nc}$, lorsqu'elle existe, qui est proche de la porteuse $f_{NB}$, pour former un couple de porteuse et sous-porteuse $(f_{NB}, f_{BB})$ qui est enregistré dans la mémoire ME. Une sous-porteuse d'émission $f_{BB}$ est dite proche d'une porteuse $f_{NB}$ par exemple si la largeur de bande $\delta f_{BB}$ de la sous-porteuse d'émission $f_{BB}$ contient au moins la porteuse $f_{NB}$ et donc au moins la demi-bande utile de la porteuse $f_{NB}$. Selon cet exemple, pour des pas de $\delta f_{NB}$ = 10 kHz et $\delta f_{BB}$ = 15 kHz > $\delta f_{NB}$, la bande utile d'une porteuse $f_{NB}$ est de 8 kHz, et une sous-porteuse $f_{BB}$ est associée à la porteuse $f_{NB}$ si la bande $(f_{BB} - \delta f_{BB}/2, f_{BB} + \delta f_{BB}/2)$ contient au moins la demi-bande utile $(f_{NB} - 4 \text{ kHz}, f_{NB})$ ou $(f_{NB}, f_{NB} + 4 \text{ kHz})$. En fonction du rapport des pas fréquentiels $\delta f_{NB}/\delta f_{BB}$, une ou plusieurs sous-porteuses $f_{BB}$ sont associées à la porteuse $f_{NB}$. Les sous-porteuses d'émission $f_{BB}$ couplées à des porteuses d'émission $f_{NB}$ des stations de base présélectionnées $BS_{NB,i}$ localisées sur le niveau $L_i$ sont rangées dans un groupe respectif $Gf_{NB,i}$.

A l'étape E3, des paramètres d'atténuation prédéterminés $\alpha_i$ avec $0 \leq i \leq I - 1 = 3$ tels que $\alpha_0 < \alpha_1 < \alpha_2 < \alpha_3$ sont préenregistrés en association respectivement avec les niveaux cellulaires $L_i$ et les groupes $Gf_{NB,i}$ dans la mémoire ME. Les paramètres d'atténuation $\alpha_i$ satisfont la relation (1) pour une atténuation prédéterminée $\alpha_{cible}$ dans les stations de base $BS_{NB}$ du réseau à bande étroite. De préférence, la relation de proportionnalité (2) est satisfaite pour tous les paramètres $\alpha_0$ à $\alpha_3$. Dans ce cas, l'un des paramètres $\alpha_0$ à $\alpha_3$, par exemple le paramètre $\alpha_0$, est fixé à une valeur prédéterminée et tous les autres paramètres d'atténuation sont déduits selon la relation (2): $\alpha_i = \alpha_0 \, D_i^{\gamma}/D_{NB}^{\gamma}$ pour i = 1, 2 et 3. Le choix du paramètre d'atténuation $\alpha_0$ avec l'indice i = 0 est arbitraire et tout autre paramètre d'atténuation peut être choisi comme valeur prédéterminée pour déterminer les autres paramètres d'atténuation selon la relation précédente.

A l'étape E4, lorsqu'en fonction de la signalisation et des données de trafic, l'interface radio $IR_{ns}$ pour le secteur déterminé $S_{ns}$ de la station de base $BS_{BB,nc}$ doit émettre une sous-porteuse d'émission $f_{BB}$ couplée à une porteuse $f_{NB}$ du groupe $Gf_{NB,i}$ pour le niveau cellulaire $L_i$ dans la mémoire ME, la puissance d'émission de sous-porteuse $P_{NB}$, qui est prévue initialement pour chaque sous-porteuse $f_{BB}$ ne perturbant pas le réseau à bande étroite, est atténuée du paramètre d'atténuation prédéterminé $\alpha_i$. La ou les sous-porteuses d'émission $f_{BB}$ couplées à la porteuse $f_{NB}$ du groupe $Gf_{NB,i}$ sont à émettre avec une puissance d'émission $P_{BB,i} = \alpha_i P_{NB}$. Le paramètre d'atténuation prédéterminé $\alpha_i$ a une valeur fixe et est utilisé pour atténuer les puissances d'émission $P_{NB}$ de toutes les sous-porteuses $f_{BB}$ appartenant au groupe $Gf_{NB,i}$. Des sous-porteuses d'émission $f_{BB}$ n'appartenant à aucun des groupes $Gf_{NB,i}$ associés aux niveaux $L_i$ avec $0 \leq i \leq I - 1 = 3$ et donc appartenant au groupe $Gf_{NB,I}$ sont considérées comme ne perturbant aucune émission dans des cellules $C_{NB}$ et sont émises avec la puissance d'émission de porteuse initiale $P_{NB}$. La figure 11 montre schématiquement des puissances émises pour des sous-porteuses $f_{BB}$ appartenant aux divers groupes $Gf_{NB,0}$ à $Gf_{NB,4}$.

Puis l'étape E4 est réitérée chaque fois qu'une sous-porteuse $f_{BB}$ est à émettre vers des mobiles $MS_{BB}$ attachés à la station de base $BS_{BB}$.

En référence maintenant à la figure 12, le procédé d'adaptation de puissances de sous-porteuses selon une deuxième réalisation de l'invention comprend des étapes préalables E10 à E12 et des étapes répétitives E13 à E16 notamment pour classer dynamiquement des porteuses $f_{NB}$. Ces étapes sont exécutées dans une station de base $BS_{BB,nc}$ d'une cellule donnée $C_{BB,nc}$ du réseau à large bande $R_{BB}$ et pour un secteur déterminé $S_{ns}$ de la station de base $BS_{BB,nc}$, et dans un mobile de mesure $MM_{BB,nc}$ situé sensiblement à la périphérie et sur la bissectrice $B_{ns}$ du secteur $S_{ns}$ de la cellule donnée $C_{BB,nc}$, comme montré aux figures 5 et 8. Le procédé est également exécuté d'une manière similaire pour chacun des secteurs de chacune des stations de base du réseau à large bande.

Pour la deuxième réalisation, une station de base $BS_{BB}$ du réseau à large bande $R_{BB}$ comprend notamment NS interfaces radio $IR_{ns}$ pour les secteurs $S_{ns}$ comportant chacune un émetteur-récepteur notamment pour émettre des sous-porteuses $f_{BB}$ dans la large bande de fréquence $\Delta F_{DL}$ pour liens descendants et recevoir des sous-porteuses dans la large bande de fréquence $\Delta F_{UL}$ pour liens montants, une mémoire ME, une unité d'association de porteuses et sous-porteuses UA, et une unité de classement de puissances de réception UCP, comme montré à la figure 13. L'interface radio dans le mobile de mesure $MM_{BB,nc}$ a mémorisé les fréquences des porteuses $f_{NB}$ et est apte à détecter les porteuses $f_{NB}$ dans la large bande de fréquence $\Delta F_{DL}$ et à transmettre dans la large bande de fréquence $\Delta F_{UL}$ des mesures de puissance de réception des porteuses détectées $f_{NB}$.

Préalablement, à l'étape E10, dans la mémoire ME de la station de base $BS_{BB}$ et dans le mobile de mesure $MM_{BB,nc}$ sont enregistrées des groupes $Gf_{NB,i}$ de porteuses d'émission $f_{NB}$ attribués à des stations de base $BS_{NB,nc}$ dans des cellules présélectionnées $C_{NB,i}$ localisées sur les niveaux cellulaires $L_i$, avec $0 \leq i \leq I - 1 = 3$, en considérant les niveaux selon leur rang croissant depuis la cellule $C_{BB,nc}$ incluant la station de base $BS_{BB,nc}$ au premier niveau $L_0$, comme à l'étape E1.

A l'étape E11, l'unité d'association de porteuses et sous-porteuses UA dans la station de base $BS_{BB,nc}$ forme des couples ($f_{NB}$, $f_{BB}$) qui associent les porteuses $f_{NB}$ de groupes attribués aux cellules présélectionnées $C_{NB,i}$ respectivement à des sous-porteuses d'émission voisines $f_{BB}$ de la station de base $BS_{BB,nc}$, comme à l'étape E2. La largeur de bande $\delta f_{NB}$ de la porteuse $f_{NB}$ d'un couple contient par exemple au moins la sous-porteuse $f_{BB}$ du couple et donc au moins la demi-bande utile de la porteuse $f_{BB}$. Selon un exemple pour lequel $\delta f_{NB} = 25$ kHz et $\delta f_{BB} = 15$ kHz $< \delta f_{NB}$, la bande utile d'une porteuse $f_{NB}$ est de 22 kHz, et deux sous-porteuses $f_{BB}$ sont couplées à la porteuse $f_{NB}$ si la bande utile ($f_{NB}$ - 11 kHz, $f_{NB}$ + 11 kHz) contient au moins la demi-bande ($f_{BB}$ - $\delta f_{BB}/2$, $f_{BB}$) ou ($f_{BB}$, $f_{BB}$ + $\delta f_{BB}/2$) de chacune des deux sous-porteuses $f_{BB}$. En fonction du rapport des pas fréquentiels $\delta f_{NB}/\delta f_{BB}$, une ou plusieurs sous-porteuses $f_{BB}$ sont associées à la porteuse $f_{NB}$.

A l'étape E12, des seuils de puissance de réception prédéterminés $TH_i$ avec $0 \leq i \leq I - 1 = 3$ tels que $TH_0 > TH_1 > TH_2 > TH_3 \cong 0$ sont enregistrés en association respectivement avec des paramètres d'atténuation prédéterminés $\alpha_i$ tels que $\alpha_0 < \alpha_1 < \alpha_2 < \alpha_3$ dans la mémoire ME. Chaque seuil de puissance prédéterminé $TH_i$ est destiné à être associé à des puissances de réception mesurées $PR_{NB}$ comprises entre ce seuil $TH_i$ et le seuil précédent $TH_{i-1}$ et devant correspondre à des porteuses $f_{NB}$ émises par des stations de base $BS_{NB}$ sur le niveau $L_i$. Le seuil $TH_0$ est associé à des puissances de réception mesurées élevées devant correspondre à des porteuses $f_{NB}$ émises par la station de base $BS_{NB,nc}$ sur le niveau $L_0$.

Après les étapes initiales E10 à E12, les étapes suivantes sont exécutées périodiquement.

A l'étape E13, l'interface radio du mobile de mesure $MM_{BB,nc}$ détecte par filtrage des porteuses $f_{NB}$ émises par le réseau $R_{NB}$ correspondant aux sous-porteuses $f_{NB}$ attribuées à des stations de base $BS_{NB,nc}$ dans des cellules présélectionnées $C_{NB,i}$ localisées sur les niveaux cellulaires $L_i$, avec $0 \leq i \leq I - 1 = 3$, et mesure les puissances de réception $PR_{NB}$ des porteuses détectées $f_{NB}$. La puissance de réception mesurée de chaque porteuse détectée peut résulter d'une moyenne de puissances de réception mesurées pendant une période prédéterminée de manière à lisser les puissances mesurées en fonction de la variation du milieu de propagation dans les réseaux due notamment à diverses mobilités et en particulier aux évanouissements ("fading" en anglais) et aux effets de masque ("shadowing" en anglais).

Par exemple, pour chaque groupe de porteuses attribué à une cellule présélectionnée $C_{NB,i}$, telle que celles hachurées dans la figure 8, le mobile de mesure $MM_{BB,nc}$ détecte la porteuse de ce groupe supportant une voie balise multiplexée à division du temps avec des voies de trafic et émise en permanence par la station de base $BS_{NB,i}$ de la cellule présélectionnée $C_{NB}$, et mesure la puissance de réception $PR_{NB}$ de la voie balise en tant que puissance de réception pour toute porteuse $f_{NB}$ émise par la station de base $BS_{NB,i}$.

A l'étape E14, le mobile de mesure $MM_{BB,nc}$ transmet les puissances de réception mesurées $PR_{NB}$ en association respectivement avec les porteuses détectées $f_{NB}$ à la station de base $BS_{BB,nc}$. Les couples de puissance mesurée et de porteuse ($PR_{NB}$; $f_{NB}$) sont transmis de manière fiable, par exemple suivant une procédure de répétition de requête automatique HARQ ("Hybrid Automatic Repeat reQuest" en anglais) et à travers des convertisseurs spatio-temporels à plusieurs ports d'antenne MIMO ("Multiple Input Multiple Output" en anglais), depuis le mobile de mesure $MM_{BB,nc}$ vers la station de base $BS_{BB,nc}$.

A l'étape E15, les puissances de réception mesurées $PR_{NB}$ reçues par la station de base $BS_{BB,nc}$ sont comparées aux seuils de puissance de réception $TH_0$ à $TH_{I-1}$ dans l'unité de classement de puissances UCP. L'unité UCP classe les puissances de réception mesurées $PR_{NB}$ en association respectivement avec les porteuses détectées $f_{NB}$ par classes de puissance $CP_i$. Une porteuse détectée $f_{NB}$ appartient à la classe $CP_i$ si la puissance mesurée $PR_{NB}$ de celle-ci est telle que $TH_{i-1} > PR_{NB} \geq TH_i$. Les porteuses $f_{NB}$ dont les puissances mesurées sont supérieures au seuil $TH_0$ sont classées dans la classe $CP_0$ correspondant au niveau $L_0$. Les porteuses $f_{NB}$ dont les puissances mesurées sont inférieures au seuil $TH_3$ sont classées dans une classe $CP_4$ correspondant à des niveaux $L_I = L_4$ sur lesquels des stations de base $BS_{NB}$ sont situées au delà du niveau $L_3$ et ne sont pas perturbées par les porteuses émises par la station de base $BS_{BB,nc}$ dans la cellule donnée $C_{BB,nc}$.

A l'étape E16, lorsqu'en fonction de la signalisation et des données de trafic, l'interface radio $IR_{ns}$ pour le secteur déterminé $S_{ns}$ de la station de base $BS_{BB,nc}$ doit émettre une sous-porteuse d'émission $f_{BB}$ associée à une porteuse $f_{NB}$ de la classe de puissance $CP_i$ dans la mémoire ME, la puissance d'émission $P_{NB}$, qui est prévue initialement pour chaque sous-porteuse $f_{BB}$ ne perturbant pas le réseau à bande étroite, est atténuée par le paramètre d'atténuation associé $\alpha_i$ lue dans la mémoire ME. Le paramètre d'atténuation ($\alpha_i$ a une valeur fixe et est utilisé pour atténuer les puissances d'émission de toutes les sous-porteuses $f_{BB}$ appartenant à la classe $CP_i$. Des sous-porteuses d'émission $f_{BB}$ n'appartenant à aucune des classes $CP_i$ associées aux niveaux $L_i$ avec $0 \leq i \leq I - 1 = 3$ et donc appartenant à la classe $CP_4$ sont considérées comme ne perturbant aucune émission dans des cellules $C_{NB}$ et sont émises avec la puissance d'émission initiale $P_{NB}$. La figure 11 montre schématiquement les puissances de réception mesurées $PR_{NB}$ comparativement aux puissances émises $P_{BB,i} = \alpha_i P_{NB}$ pour des sous-porteuses d'émission $f_{BB}$ associées aux diverses classes $CP_0$ à $CP_4$.

Puis les étapes E13 à E16 sont réitérées chaque fois qu'une sous-porteuse $f_{BB}$ est à émettre vers des mobiles $MS_{BB}$ attachés à la station de base $BS_{BB}$.

Selon une variante de la deuxième réalisation, pour chaque porteuse détectée de chaque groupe attribué à une cellule présélectionnée $C_{NB,i}$, le mobile de mesure $MM_{BB,nc}$ mesure la puissance de réception moyenne de voies de trafic actives multiplexées à division du temps dans une trame supportée par la porteuse détectée $f_{NB}$. Les puissances d'émission des sous-porteuses $f_{BB}$ dans la station de base $BS_{BB,nc}$ de la cellule donnée $C_{BB,nc}$ sont alors adaptées automatiquement pour minimiser les perturbations sur la charge de trafic du réseau à bande étroite $R_{NB}$. Si le nombre de porteuses actives $f_{NB}$ dans les stations de base $BS_{NB}$ des cellules présélectionnées $C_{NB,i}$ est élevé, la capacité d'émission des stations de base $BS_{BB}$ est réduite. En revanche, si le trafic dans le réseau à bande étroite $R_{NB}$ est faible ce qui signifie que de nombreuses porteuses $f_{NB}$ sont inactives et de nombreuses puissances de réception mesurées $PR_{NB}$ sont nulles, la capacité d'émission des stations de base $BS_{BB}$ est accrue.

Selon une autre variante de la deuxième réalisation, le nombre de puissances à comparer aux seuils $TH_0$ à $TH_{I-1}$ est réduit à l'étape E15. L'unité de classement de puissances UCP dans la station de base $BS_{BB,nc}$ de la cellule donnée établit à l'étape E15 pour chaque groupe de porteuses attribué à une cellule présélectionnée $C_{NB,i}$, la moyenne des puissances de réception $PR_{NB}$ mesurées pour toutes les porteuses $f_{NB}$ appartenant à ce groupe. Par exemple, pour chaque groupe, le mobile de mesure $MM_{BB,nc}$ détecte la porteuse de ce groupe supportant une voie balise multiplexée à division du temps avec des voies de trafic et émise en permanence par la station de base dans la cellule présélectionnée $C_{NB,i}$, et mesure la puissance de réception $PR_{NB}$ de la voie balise en tant que puissance de réception moyenne pour toutes les porteuses $f_{NB}$ émises par la station de base dans la cellule $C_{NB,i}$. L'unité UCP compare la puissance moyenne du groupe aux seuils $TH_0$ à $TH_{I-1}$ afin que les puissances d'émission de toutes les sous-porteuses $f_{BB}$ voisines des porteuses $f_{NB}$ appartenant au groupe soient atténuées avec le même paramètre d'atténuation prédéterminé $\alpha_i$.

Selon encore une autre variante, l'étape de mesure E13 des puissances de réception $PR_{NB}$ de porteuses détectées $f_{NB}$ est réalisée en un point de mesure quelconque situé dans la cellule donnée $C_{BB,nc}$ et dans le secteur déterminé $S_{ns}$. Ce point peut être sur la station de base $BS_{BB,nc}$ dans la cellule donnée $C_{BB,nc}$. Dans ce cas, toutes les étapes E10 à E16 sont exécutées dans la station de base $BS_{BB,nc}$ sans recourir à un mobile de mesure $MM_{BB,nc}$. La station de base déterminée $BS_{BB,nc}$ détecte elle-même des porteuses $f_{NB}$ émises dans les cellules présélectionnées localisées dans le secteur déterminé $S_{ns}$ et mesure les puissances de réception de ces porteuses $f_{NB}$.

Selon d'autres réalisations, le procédé est appliqué d'une manière similaire suivant l'autre direction de transmission relative à des liens montants depuis un mobile $MS_{BB}$ vers une station de base $BS_{BB}$ dans une cellule donnée pour des sous-porteuses incluses dans la bande de fréquence $\Delta F_{UL}$ pour liens montants commune aux réseaux $R_{NB}$ et $R_{BB}$.

Dans ce cas, les étapes du procédé, qui étaient exécutées dans une station de base $BS_{BB}$ du réseau à large bande $R_{BB}$ selon la première réalisation de l'invention, sont exécutées à l'émission pour liens montants dans chaque mobile $MS_{BB}$ attaché à une station de base $BS_{BB}$ localisée dans une cellule donnée de manière à adapter les puissances d'émission des sous-porteuses à émettre par le mobile $MS_{BB}$ à des puissances d'émission d'autres porteuses incluses dans la bande de fréquence $\Delta F_{UL}$ et aptes à être émises par des mobiles $MS_{NB}$ dans le réseau à bande étroite qui sont localisés dans des cellules présélectionnées associées au secteur déterminé de la cellule donnée.

En particulier, toutes les étapes E1 à E4 ou E10 à E16 du procédé selon l'invention peuvent être exécutées dans chaque mobile $MS_{BB}$.

L'invention décrite concerne un procédé et un émetteur-récepteur en tant que station de base ou mobile pour adapter des puissances de sous-porteuses émises suivant une direction de transmission prédéterminée dans un réseau de radiocommunication cellulaire à large bande en fonction des puissances de porteuses émises dans la large bande suivant la direction de transmission prédéterminée dans un réseau de radiocommunication cellulaire à bande étroite colocalisé avec le réseau à large bande. Selon une implémentation, des étapes du procédé de l'invention sont déterminées par les instructions d'un programme d'ordinateur incorporé dans l'émetteur-récepteur. Le programme apte à être mis en oeuvre dans l'émetteur-récepteur de l'invention comporte des instructions de programme qui, lorsque ledit programme est exécuté dans l'émetteur-récepteur dont le fonctionnement est alors commandé par l'exécution du programme, réalisent des étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

## Revendications

1. Procédé pour adapter des puissances de sous-porteuses ($f_{BB}$) dans un premier réseau de radiocommunication cellulaire ($R_{BB}$) ayant des premières stations de base ($BS_{BB}$) à plusieurs secteurs directionnels en fonction des puissances de porteuses ($f_{NB}$) dans un deuxième réseau de radiocommunication cellulaire ($R_{NB}$) ayant des deuxièmes stations de base omnidirectionnelles ($BS_{NB}$), les premier et deuxième réseaux ayant en commun des cellules ($C_{NB,nc}$) ayant chacune des première et deuxième stations de base ($BS_{BB}$, $BS_{NB}$) colocalisées et une large bande de fréquence ($\Delta F_{DL}$; $\Delta F_{UL}$) incluant les sous-porteuses ($f_{BB}$) attribuées aux secteurs des premières stations de base ($BS_{BB}$) et des groupes ($Gf_{NB,nc}$) de porteuses ($f_{NB}$) attribués respectivement aux deuxièmes stations de base ($BS_{NB}$) dans un motif cellulaire de réutilisation ($MC_{NB}$) du deuxième réseau ayant plusieurs niveaux concentriques de localisation de cellule ($L_0$ à $L_{l-1}$), comprenant une atténuation (E4; E16) par un paramètre d'atténuation ($\alpha_i$) d'une puissance prédéterminée ($P_{NB}$) pour chaque sous-porteuse ($f_{BB}$) qui est à émettre par un émetteur-récepteur ($BS_{BB}$; $MS_{BB}$) du premier réseau ($R_{BB}$) localisé dans une cellule donnée ($C_{BB,nc}$) et dans un secteur déterminé ($S_{ns}$) de la cellule donnée et qui est voisine d'une porteuse ($f_{NB}$) appartenant à l'un des groupes attribués à des deuxièmes stations de base ($BS_{NB}$) dans des cellules ($C_{NB,i}$) présélectionnées dans le secteur déterminé ($S_{ns}$) et sur des niveaux ($L_0$ à $L_{l-1}$) depuis la cellule donnée ($C_{BB,nc}$) inférieurs à un niveau élevé prédéterminé ($L_l$), le paramètre d'atténuation étant d'autant plus faible que le niveau respectif ($L_i$) est proche de la cellule donnée, les sous-porteuses ($f_{BB}$) autres que lesdites sous-porteuses voisines étant à émettre avec la puissance d'émission prédéterminée ($P_{NB}$) dans le secteur déterminé ($S_{ns}$) par l'émetteur-récepteur ($BS_{BB}$; $MS_{BB}$).

2. Procédé selon la revendication 1, comprenant une mesure (E13) de puissances de réception ($PR_{NB}$) des porteuses ($f_{NB}$) des groupes attribués aux deuxièmes stations de base ($BS_{NB,i}$) des cellules présélectionnées dans le secteur déterminé ($S_{ns}$) de la cellule donnée ($C_{BB,nc}$) en un point ($MM_{BB,nc}$; $BS_{BB,nc}$) situé dans la cellule donnée ($C_{BB,nc}$) et dans le secteur déterminé ($S_{ns}$), et un classement (E15) des porteuses dans des classes ($CP_i$) associées respectivement aux niveaux ($L_0$ à $L_{l-1}$), aux paramètres d'atténuation ($\alpha_0$ à $\alpha_{l-1}$) et à des seuils ($TH_0$ à $TH_{l-1}$) d'autant plus faibles que les niveaux associés sont éloignés de la cellule donnée, les porteuses dans une classe ($CP_i$) ayant des puissances de réception ($PR_{NB}$) comprises entre le seuil ($TH_i$) associé à la classe et le seuil précédent ($TH_{i-1}$), la puissance prédéterminée ($P_{NB}$) pour une sous-porteuse ($f_{BB}$) qui est à émettre par l'émetteur-récepteur ($BS_{BB}$, $MS_{BB}$) étant atténuée par un paramètre d'atténuation ($\alpha_i$) lorsque la sous-porteuse est voisine d'une porteuse ($f_{NB}$)

appartenant à la classe ($CP_i$) associée au paramètre d'atténuation ($\alpha_i$).

3. Procédé selon la revendication 2, selon lequel la puissance de réception mesurée ($PR_{NB}$) d'une porteuse ($f_{NB}$) est la puissance de réception moyenne de voies de trafic actives supportées par la porteuse.

4. Procédé selon la revendication 2, selon lequel la puissance de réception mesurée ($PR_{NB}$) de chaque porteuse ($f_{NB}$) d'un groupe attribué à une deuxième station de base ($BS_{NB}$) d'une cellule ($C_{NB,i}$) présélectionnée dans le secteur déterminé ($S_{ns}$) est la moyenne des puissances de réception mesurées pour toutes les porteuses appartenant au groupe.

5. Procédé selon la revendication 2, selon lequel la puissance de réception mesurée ($PR_{NB}$) de chaque porteuse ($f_{NB}$) d'un groupe attribué à une deuxième station de base ($BS_{NB}$) d'une cellule ($C_{NB,i}$) présélectionnée dans le secteur déterminé ($S_{ns}$) est la puissance de réception d'une voie balise supportée par l'une des porteuses du groupe.

6. Procédé selon l'une des revendications 1 à 5, selon lequel les paramètres d'atténuation ($\alpha_0$ à $\alpha_{l-1}$) dépendent d'un paramètre d'atténuation cible du rapport porteuse sur interférence à la réception de porteuses ($f_{NB}$) dans un émetteur-récepteur ($MM_{NB,nc}$) localisé dans une cellule du deuxième réseau ($R_{NB}$).

7. Procédé selon la revendication 6, selon lequel le paramètre d'atténuation ($\alpha_i$) pour une sous-porteuse ($f_{BB}$) voisine d'une porteuse ($f_{NB}$) appartenant à un groupe attribué à des deuxièmes stations de base dans des cellules présélectionnées ($C_{NB,i}$) localisées sur un niveau respectif ($L_i$) est $\alpha_i = k\, D_i^{\gamma}/D_{NB}^{\gamma}$, k étant un facteur fonction du paramètre d'atténuation cible et de nombres de cellules présélectionnées localisées respectivement sur les niveaux ($L_0$ à $L_{l-3}$) inférieurs au niveau élevé prédéterminé ($L_4$) depuis la cellule donnée ($C_{BB,nc}$), $D_i$ étant une distance moyenne entre une première station de base ($BS_{BB}$) et des points ($MS_{NB}$) des cellules présélectionnées sur le niveau respectif ($L_i$) les plus éloignés de la cellule donnée, $D_{NB}$ étant la distance de réutilisation du motif cellulaire ($MC_{NB}$) du deuxième réseau, et $\gamma$ étant une constante de propagation dans les réseaux.

8. Procédé selon l'une des revendications 1 à 7, selon lequel les nombres de cellules ($C_{NB,i}$) présélectionnées dans le secteur déterminé ($S_{ns}$) sur les niveaux ($L_0$ à $L_{l-3}$) depuis la cellule donnée ($C_{BB,nc}$) sont respectivement égaux au plus aux rangs des niveaux comptés depuis la cellule donnée jusqu'au niveau inférieur au niveau élevé prédéterminé ($L_l$), l'ensemble des cellules présélectionnées ($C_{NB,i}$) sur un niveau étant symétrique par rapport à la bissectrice ($B_{ns}$) du secteur déterminé.

9. Procédé selon l'une des revendications 1 à 8, selon lequel le nombre de niveaux inférieurs au niveau élevé ($L_l$) est supérieur à 2, et les paramètres d'atténuation sont nuls pour des sous-porteuses ($f_{BB}$) voisines de porteuses ($f_{NB}$) appartenant à des groupes attribués à des deuxièmes stations de base ($BS_{NB}$) dans des cellules ($C_{NB,i}$) présélectionnées dans le secteur déterminé ($S_{ns}$) situées sur au moins l'un des deux premiers niveaux ($L_0$, $L_1$).

10. Emetteur-récepteur ($BS_{BB}$; $MS_{BB}$) apte à être localisé dans une cellule donnée ($C_{BB,nc}$) d'un premier réseau de radiocommunication cellulaire ($R_{BB}$) pour adapter des puissances d'émission de sous-porteuses ($f_{BB}$) en fonction des puissances d'émission de porteuses ($f_{NB}$) dans un deuxième réseau de radiocommunication cellulaire ($R_{NB}$), les premier et deuxième réseaux ayant en commun des cellules ($C_{NB,nc}$) ayant chacune une première station de base ($BS_{BB}$) à plusieurs secteurs directionnels du premier réseau et une deuxième station de base omnidirectionnelle ($BS_{NB}$) du deuxième réseau colocalisées et une large bande de fréquence ($\Delta F_{DL}$; $\Delta F_{UL}$) incluant les sous-porteuses ($f_{BB}$) attribuées aux secteurs des premières stations de base ($BS_{BB}$) et des groupes ($Gf_{NB,nc}$) de porteuses ($f_{NB}$) attribués respectivement aux deuxièmes stations de base ($BS_{NB}$) dans un motif cellulaire de réutilisation ($MC_{NB}$) du deuxième réseau ayant plusieurs niveaux concentriques de localisation de cellule ($L_0$ à $L_{l-1}$), comprenant un moyen ($IR_{ns}$) pour atténuer par un paramètre d'atténuation ($\alpha_i$) une puissance prédéterminée ($P_{NB}$) de chaque sous-porteuse ($f_{BB}$) qui est à émettre dans un secteur déterminé ($S_{ns}$) de la cellule donnée ($C_{BB,nc}$) et qui est voisine d'une porteuse ($f_{NB}$) appartenant à l'un de groupes attribués à des deuxièmes stations de base ($BS_{NB}$) dans des cellules ($C_{NB,i}$) présélectionnées dans le secteur déterminé ($S_{ns}$) et sur des niveaux ($L_0$ à $L_{l-1}$) depuis la cellule donnée ($C_{BB,nc}$) inférieurs à un niveau élevé prédéterminé ($L_l$), le paramètre d'atténuation étant d'autant plus faible que le niveau respectif ($L_i$) est proche de la cellule donnée, et un moyen ($IR_{ns}$) pour émettre dans le secteur déterminé ($S_{ns}$) les sous-porteuses ($f_{BB}$) avec la puissance d'émission prédéterminée ($P_{NB}$) autres que lesdites sous-porteuses voisines.

11. Réseau de radiocommunication à large bande ($R_{BB}$) comprenant, en tant que premier réseau, des stations de base ($BS_{BB}$) à plusieurs secteurs directionnels en tant qu'émetteurs-récepteurs selon la revendication 10 pour émettre des sous-porteuses ($f_{BB}$) comprises dans une bande de fréquence ($\Delta F_{DL}$) dédiée à des liens descendants et ayant des puissances d'émission à adapter à des puissances d'émission de porteuses ($f_{NB}$) incluses dans la bande de fréquence ($\Delta F_{DL}$) dédiée aux liens descendants et aptes à être émises par des stations de base omnidirectionnelles ($BS_{NB}$) dans un réseau de radiocommunication à bande étroite ($R_{NB}$) en tant que deuxième réseau colocalisé avec le réseau à large bande, et des mobiles ($MS_{BB}$) en tant qu'émetteurs-récepteurs selon la revendication 10 pour émettre d'autres sous-porteuses ($f_{BB}$) comprises dans une bande de fréquence ($\Delta F_{UL}$) dédiée à des liens montants et ayant des puissances d'émission à adapter à des puissances d'émission d'autres porteuses ($f_{NB}$) incluses dans la bande de fréquence ($\Delta F_{UL}$) dédiée aux liens montants et aptes à être émises par des mobiles ($MS_{NB}$) dans le réseau à bande étroite.

12. Emetteur-récepteur ($BS_{BB}$; $MS_{BB}$) apte à être localisé dans une cellule donnée ($C_{BB,nc}$) d'un premier réseau de radiocommunication cellulaire ($R_{BB}$) pour adapter des puissances d'émission de sous-porteuses ($f_{BB}$) en fonction des puissances d'émission de porteuses ($f_{NB}$) dans un deuxième réseau de radiocommunication cellulaire ($R_{NB}$), les premier et deuxième réseaux ayant en commun des cellules ($C_{NB,nc}$) ayant chacune une première station de base ($BS_{BB}$) à plusieurs secteurs directionnels du premier réseau et une deuxième station de base omnidirectionnelle ($BS_{NB}$) du deuxième réseau colocalisées et une large bande de fréquence ($\Delta F_{DL}$, $\Delta F_{UL}$) incluant les sous-porteuses ($f_{BB}$) attribuées aux secteurs des premières stations de base ($BS_{BB}$) et des groupes ($Gf_{NB}, n_c$) de porteuses ($f_{NB}$) attribués respectivement aux deuxièmes stations de base ($BS_{NB}$) dans un motif cellulaire de réutilisation ($MC_{NB}$) du deuxième réseau ayant plusieurs niveaux concentriques de localisation de cellule ($L_0$ à $L_{I-1}$), comprenant un moyen (UGP) pour classer des porteuses de groupes attribués à des deuxièmes stations de base ($BS_{NB,i}$) de cellules présélectionnées dans un secteur déterminé ($S_{ns}$) de la cellule donnée ($C_{BB,nc}$) et sur des niveaux ($L_0$ à $L_{I-1}$) depuis la cellule donnée inférieurs à un niveau élevé prédéterminé ($L_I$), dans des classes ($CP_i$) associées respectivement aux niveaux ($L_0$ à $L_{I-1}$), à des paramètres d'atténuation ($\alpha_0$ à ($\alpha_{i-1}$) et à des seuils ($TH_0$ à $TH_{I-1}$) d'autant plus faibles que les niveaux associés sont éloignés de la cellule donnée, les porteuses dans une classe ($CP_i$) ayant des puissances de réception ($PR_{NB}$) en un point ($MS_{BB}$; $BS_{BB}$) situé dans la cellule donnée ($C_{BB,nc}$) et dans le secteur déterminé ($S_{ns}$) comprises entre le seuil ($TH_i$) associé à la classe et le seuil précédent ($TH_{i-1}$), un moyen ($IR_{ns}$) pour atténuer par un paramètre d'atténuation ($\alpha_i$) une puissance prédéterminée ($P_{NB}$) pour chaque sous-porteuse ($f_{BB}$) à émettre lorsque la sous-porteuse est voisine d'une porteuse ($f_{NB}$) appartenant à la classe ($CP_i$) associée au paramètre d'atténuation ($\alpha_i$), et un moyen ($IR_{ns}$) pour émettre dans le secteur déterminé ($S_{ns}$) les sous-porteuses ($f_{BB}$) avec la puissance d'émission prédéterminée ($P_{NB}$) autres que lesdites sous-porteuses voisines.

13. Réseau de radiocommunication à large bande ($R_{BB}$) comprenant, en tant que premier réseau, des stations de base ($BS_{BB}$) à plusieurs secteurs directionnels en tant qu'émetteurs-récepteurs selon la revendication 12 pour émettre des sous-porteuses ($f_{BB}$) comprises dans une bande de fréquence ($\Delta F_{DL}$) dédiée à des liens descendants et ayant des puissances d'émission à adapter à des puissances d'émission de porteuses ($f_{NB}$) incluses dans la bande de fréquence ($\Delta F_{DL}$) dédiée aux liens descendants et aptes à être émises par des stations de base omnidirectionnelles ($BS_{NB}$) dans un réseau de radiocommunication à bande étroite ($R_{NB}$) en tant que deuxième réseau colocalisé avec le réseau à large bande, et des mobiles ($MS_{BB}$) en tant qu'émetteurs-récepteurs selon la revendication 12 pour émettre d'autres sous-porteuses ($f_{BB}$) comprises dans une bande de fréquence ($\Delta F_{UL}$) dédiée à des liens montants et ayant des puissances d'émission à adapter à des puissances d'émission d'autres porteuses ($f_{NB}$) incluses dans la bande de fréquence ($\Delta F_{UL}$) dédiée aux liens montants et aptes à être émises par des mobiles ($MS_{NB}$) dans le réseau à bande étroite.

14. Programme d'ordinateur apte à être mis en oeuvre dans un émetteur-récepteur ($BS_{BB}$; $MS_{BB}$), ledit programme étant **caractérisé en ce qu'**il comprend des instructions qui, lorsque le programme est exécuté dans l'émetteur-récepteur ($BS_{BB}$; $MS_{BB}$), réalisent le procédé selon l'une des revendications 1 à 9.

## Patentansprüche

1. Verfahren zur Anpassung der Leistungen von Unterträgerfrequenzen ($f_{BB}$) in einem ersten zellularen Funkkommunikationsnetz ($R_{BB}$) mit ersten Basisstationen ($BS_{BB}$) mit mehreren Richtungssektoren in Abhängigkeit von den Leistungen von Trägerfrequenzen ($f_{NB}$) in einem zweiten zellularen Funkkommunikationsnetz ($R_{NB}$) mit zweiten Allseitenbasisstationen ($BS_{NB}$), wobei die ersten und zweiten Netze Zellen ($C_{NB,nc}$) gemeinsam haben, die jeweils erste und zweite colokalisierte Basisstationen ($BS_{BB}$, $BS_{NB}$) und ein breites Frequenzband ($\Delta F_{DL}$; $\Delta F_{UL}$) haben, das die Unterträgerfrequenzen ($f_{BB}$), die den Sektoren der ersten Basisstationen ($BS_{BB}$) zugeordnet sind, und Gruppen ($Gf_{NB,nc}$) von Trägerfrequenzen ($f_{NB}$) einschließt, die jeweils den zweiten Basisstationen ($BS_{NB}$) in einem zellularen Wiederverwendungsmotiv ($MC_{NB}$) des zweiten Netzes zugeordnet sind, das mehrere konzentrische Lo-

kalisierungsebenen einer Zelle ($L_0$ bis $L_{I-1}$) hat, umfassend

eine Dämpfung (E4; E16) durch einen Dämpfungsparameter ($\alpha_i$) mit einer vorbestimmten Leistung ($P_{NB}$) für jede Unterträgerfrequenz ($f_{BB}$), die von einem Sender-Empfänger ($BS_{BB}$; $MS_{BB}$) des ersten Netzes ($R_{BB}$) zu entsenden ist, der in einer gegebenen Zelle ($C_{BB,nc}$) und in einem bestimmten Sektor ($S_{ns}$) der gegebenen Zelle lokalisiert ist, und die nahe einer Trägerfrequenz ($f_{NB}$) ist, die einer der Gruppen angehört, die zweiten Basisstationen ($BS_{NB}$) in Zellen ($C_{NB,i}$) zugeordnet sind, die in dem bestimmten Sektor ($S_{ns}$) und auf Ebenen ($L_0$ bis $L_{i-1}$) von der gegebenen Zelle ($C_{BB,nc}$) ausgehend unter einer vorbestimmten hohen Ebene ($L_1$) vorausgewählt sind, wobei der Dämpfungsparameter umso geringer ist, als die jeweilige Ebene ($L_i$) nahe der gegebenen Zelle ist, wobei die anderen Unterträgerfrequenzen ($f_{BB}$) als die nahen Unterträgerfrequenzen mit der vorbestimmten Sendeleistung ($P_{NB}$) in dem bestimmten Sektor ($S_{ns}$) vom Sender-Empfänger ($BS_{BB}$; $MS_{BB}$) zu entsenden sind.

2. Verfahren nach Anspruch 1, umfassend eine Messung (E13) der Empfangsleistungen ($PR_{NB}$) der Trägerfrequenzen ($f_{NB}$) der Gruppen, die den zweiten Basisstationen ($BS_{NB,i}$) der vorausgewählten Zellen in dem bestimmten Sektor ($S_{ns}$) der gegebenen Zelle ($C_{BB,nc}$) an einem Punkt ($MM_{BB,nc}$; $BS_{BB,nc;}$), der sich in der gegebenen Zelle ($C_{BB,nc}$) und in dem bestimmten Sektor ($S_{ns}$) befindet, zugeordnet sind, und eine Klassifizierung (E15) der Trägerfrequenzen in Klassen ($CP_i$), die jeweils den Ebenen ($L_0$-$L_{I-1}$), den Dämpfungsparametern ($\alpha_0$ bis $\alpha_{I-1}$) und Schwellen ($TH_0$ bis $TH_{I-1}$) zugeordnet sind, die umso geringer sind, als die zugehörigen Ebenen von der gegebenen Zelle entfernt sind, wobei die Trägerfrequenzen in einer Klasse ($CP_i$) Empfangsleistungen ($PR_{NB}$) haben, die zwischen der der Klasse zugeordneten Schwelle ($TH_i$) und der vorhergehenden Schwelle ($TH_{i-1}$) angeordnet ist, wobei die vorbestimmte Leistung ($P_{NB}$) für eine Unterträgerfrequenz ($f_{BB}$), die von dem Sender-Empfänger ($BS_{BB}$; $MS_{BB}$) zu entsenden ist, durch einen Dämpfungsparameter ($\alpha_1$) gedämpft wird, wenn die Unterträgerfrequenz nahe einer Trägerfrequenz ($f_{NB}$) ist, die der dem Dämpfungsparameter ($\alpha_i$) zugeordneten Klasse ($CP_i$) angehört.

3. Verfahren nach Anspruch 2, bei dem die gemessene Empfangsleistung ($PR_{NB}$) einer Trägerfrequenz ($f_{NB}$) ist durchschnittliche Empfangsleistung von aktiven Verkehrswegen, die von der Trägerfrequenz getragen werden, ist.

4. Verfahren nach Anspruch 2, bei dem die gemessene Empfangsleistung($PR_{NB}$) jeder Trägerfrequenz ($f_{NB}$) einer Gruppe, die einer zweiten Basisstation ($BS_{NB}$) einer Zelle ($C_{NB,i}$) zugeordnet ist, die in dem bestimmten Sektor ($S_{ns}$) vorausgewählt ist, der Durchschnitt der für alle der Gruppe angehörenden Trägerfrequenzen gemessenen Empfangsleistungen ist.

5. Verfahren nach Anspruch 2, bei dem die gemessene Empfangsleistung($PR_{NB}$) jeder Trägerfrequenz ($f_{NB}$) einer Gruppe, die einer zweiten Basisstation ($BS_{NB}$) einer Zelle ($C_{NB,i}$) zugeordnet ist, die in dem bestimmten Sektor ($S_{ns}$) vorausgewählt ist, die Empfangsleistung eines von einer der Trägerfrequenzen der Gruppe getragenen Markerbandes ist.

6. Verfahren nach einem der Ansprüche 1 bis 5, bei dem die Dämpfungsparameter ($\alpha_0$ bis $\alpha_{I-1}$) von einem Zieldämpfungsparameter des Verhältnisses Trägerfrequenz zu Interferenz beim Empfang von Trägerfrequenzen ($f_{NB}$) in einem Sender-Empfänger ($MM_{NB,nc}$), der in einer Zelle des zweiten Netzes ($R_{NB}$) lokalisiert ist, abhängen.

7. Verfahren nach Anspruch 6, bei dem der Dämpfungsparameter ($\alpha_i$) für eine Unterträgerfrequenz ($f_{BB}$) nach einer Trägerfrequenz ($f_{NB}$), die einer Gruppe angehört, die zweiten Basisstationen in vorausgewählten Zellen ($C_{NB,i}$), die auf einer jeweiligen Ebene ($L_i$) lokalisiert sind, zugeordnet ist, gleich $\alpha_i = D_i^\gamma / D_{NB}^\gamma$ ist, wobei k ein Faktor ist, der von dem Zieldämpfungsparameter und von der Anzahl von vorausgewählten Zellen, die jeweils auf den Ebenen ($L_0$ bis $L_{I-3}$) unter der vorbestimmten hohen Ebene ($L_4$) ausgehend von der gegebenen Zelle ($C_{BB,nc}$) lokalisiert sind, abhängt, wobei $D_i$ eine durchschnittliche Distanz zwischen einer ersten Basisstation ($BS_{BB}$) und Punkten ($MS_{NB}$) der vorausgewählten Zellen auf der jeweiligen Ebene ($L_1$), die von der gegebenen Zelle am weitesten entfernt sind, wobei $D_{NB}$ die Wiederverwendungsdistanz des zellularen Motivs ($MC_{NB}$) des zweiten Netzes ist, und y eine Ausbreitungskonstante in den Netzen ist.

8. Verfahren nach einem der Ansprüche 1 bis 7, bei dem die Anzahl von vorausgewählten Zellen ($C_{NB,1}$) in dem bestimmten Sektor ($S_{ns}$) auf den Ebenen ($L_0$ bis $L_{I-3}$) ausgehend von der gegebenen Zelle ($C_{BB,nc}$) jeweils höchstens jeweils gleich den Rängen der Ebenen ist, die von der gegebenen Zelle bis zu der Ebene unter der vorbestimmten hohen Ebene ($L_I$) gezählt werden, wobei die Gesamtheit der vorausgewählten Zellen ($C_{NB,i}$) auf einer Ebene zur Winkelhalbierenden ($B_{ns}$) des bestimmten Sektors symmetrisch ist.

9. Verfahren nach einem der Ansprüche 1 bis 8, bei dem die Anzahl von Ebenen unter der hohen Ebene ($L_I$) größer als 2 ist und die Dämpfungsparameter gleich Null für Unterträgerfrequenzen ($f_{BB}$) nahe von Trägerfrequenzen ($f_{NB}$)

sind, die Gruppen angehören, die zweiten Basisstationen ($BS_{NB}$) in vorausgewählten Zellen ($C_{NB,i}$) in dem bestimmten Sektor ($S_{ns}$), die sich auf mindestens einer der beiden ersten Ebenen ($L_0$, $L_1$) befinden, zugeordnet sind.

10. Sender-Empfänger ($BS_{BB}$; $MS_{BB}$), der geeignet ist, in einer gegebenen Zelle ($C_{BB,nc}$) eines ersten zellularen Funkkommunikationsnetzes ($R_{BB}$) lokalisiert zu werden, um Sendeleistungen von Unterträgerfrequenzen ($f_{BB}$) in Abhängigkeit von den Sendeleistungen von Trägerfrequenzen ($f_{NB}$) in einem zweiten zellularen Funkkommunikationsnetz ($R_{NB}$) anzupassen, wobei die ersten und zweiten Netze Zellen ($C_{NB,nc}$) gemeinsam haben, die jeweils eine erste Basisstation ($BS_{BB}$) mit mehreren Richtungssektoren des ersten Netzes und eine zweite Allseitenbasisstationen ($BS_{NB}$) des zweiten Netzes, die co-lokalisiert sind, und ein breites Frequenzband ($\Delta F_{DL}$; $\Delta F_{UL}$) haben, das die Unterträgerfrequenzen ($f_{BB}$), die den Sektoren der ersten Basisstationen ($BS_{BB}$) zugeordnet sind, und Gruppen ($Gf_{NB,nc}$) von Trägerfrequenzen ($f_{NB}$) einschließt, die jeweils den zweiten Basisstationen ($BS_{NB}$) in einem zellularen Wiederverwendungsmotiv ($MC_{NB}$) des zweiten Netzes zugeordnet sind, das mehrere konzentrische Lokalisierungsebenen einer Zelle ($L_0$ bis $L_{l-1}$) hat, umfassend
ein Mittel ($IR_{ns}$) zur Dämpfung durch einen Dämpfungsparameter ($\alpha_i$) mit einer vorbestimmten Leistung ($P_{NB}$) für jede Unterträgerfrequenz ($f_{BB}$), die in einem bestimmten Sektor ($S_{ns}$) der gegebenen Zelle ($C_{BB,nc}$) zu entsenden ist, und die nahe einer Trägerfrequenz ($f_{NB}$) ist, die einer der Gruppen angehört, die zweiten Basisstationen ($BS_{NB}$) in Zellen ($C_{NB,i}$) zugeordnet sind, die in dem bestimmten Sektor ($S_{ns}$) und auf Ebenen ($L_0$ bis $L_{l-1}$) von der gegebenen Zelle ($C_{BB,nc}$) ausgehend unter einer vorbestimmten hohen Ebene ($L_l$) vorausgewählt sind, wobei der Dämpfungsparameter umso geringer ist, als die jeweilige Ebene ($L_i$) nahe der gegebenen Zelle ist, und ein Mittel ($IR_{ns}$), um in dem bestimmten Sektor ($S_{ns}$) die anderen Unterträgerfrequenzen ($f_{BB}$) mit der vorbestimmten Sendeleistung ($P_{NB}$) als die nahen Unterträgerfrequenzen zu entsenden.

11. Breitbandradiokommunikationsnetz ($R_{BB}$), umfassend als erstes Netz Basisstationen ($BS_{BB}$) mit mehreren Richtungssektoren als Sender-Empfänger nach Anspruch 10, um Unterträgerfrequenzen ($f_{BB}$) zu entsenden, die in einem Frequenzband ($\Delta F_{DL}$) enthalten sind, das für absteigende Verbindungen bestimmt ist, und die Sendeleistungen haben, die an Sendeleistungen von Trägerfrequenzen ($f_{NB}$) anzupassen sind, die in dem Frequenzband ($\Delta F_{DL}$) eingeschlossen sind, das für die absteigenden Verbindungen bestimmt ist, und die geeignet sind, von Allseitenbasisstationen ($BS_{NB}$) in einem Schmalbandradiokommunikationsnetz ($R_{NB}$) als zweites Netz, das mit dem Breitbandnetz co-lokalisiert ist, entsandt zu werden, und Mobilgeräte ($MS_{BB}$) als Sender-Empfänger nach Anspruch 10, um weitere Unterträgerfrequenzen ($f_{BB}$) zu entsenden, die in einem Frequenzband ($\Delta F_{UL}$) enthalten sind, das für aufsteigende Verbindungen bestimmt ist, und die Sendeleistungen haben, die an Sendeleistungen von weiteren Trägerfrequenzen ($f_{NB}$) anzupassen sind, die in dem Frequenzband ($\Delta F_{UL}$) enthalten sind, das für die aufsteigenden Verbindungen bestimmt ist, und die geeignet sind, von Mobilgeräten ($MS_{NB}$) in dem Schmalbandnetz entsandt zu werden.

12. Sender-Empfänger ($BS_{BB}$; $MS_{BB}$), der geeignet ist, in einer gegebenen Zelle ($C_{BB,nc}$) eines ersten zellularen Funkkommunikationsnetzes ($R_{BB}$) lokalisiert zu werden, um Sendeleistungen von Unterträgerfrequenzen ($f_{BB}$) in Abhängigkeit von den Sendeleistungen von Trägerfrequenzen ($f_{NB}$) in einem zweiten zellularen Funkkommunikationsnetz ($R_{NB}$) anzupassen, wobei die ersten und zweiten Netze Zellen ($C_{NB,nc}$) gemeinsam haben, die jeweils eine erste Basisstation ($BS_{BB}$) mit mehreren Richtungssektoren des ersten Netzes und eine zweite Allseitenbasisstationen ($BS_{NB}$) des zweiten Netzes, die co-lokalisiert sind, und ein breites Frequenzband ($\Delta F_{DL}$; $\Delta F_{UL}$) haben, das die Unterträgerfrequenzen ($f_{BB}$), die den Sektoren der ersten Basisstationen ($BS_{BB}$) zugeordnet sind, und Gruppen ($Gf_{NB,nc}$) von Trägerfrequenzen ($f_{NB}$) einschließt, die jeweils den zweiten Basisstationen ($BS_{NB}$) in einem zellularen Wiederverwendungsmotiv ($MC_{NB}$) des zweiten Netzes zugeordnet sind, das mehrere konzentrische Lokalisierungsebenen einer Zelle ($L_0$ bis $L_{l-1}$) hat, umfassend
ein Mittel (UGP) zur Klassifizierung der Trägerfrequenzen von Gruppen, die zweiten Basisstationen ($BS_{NB,i}$) von Zellen zugeordnet sind, die in einem bestimmten Sektor ($S_{ns}$) der gegebenen Zelle ($C_{BB,nc}$) und auf Ebenen ($L_0$ bis $L_{l-1}$) von der gegebenen Zelle ausgehend unter einer vorbestimmten hohen Ebene ($L_l$) vorausgewählt sind, in Klassen ($CP_i$), die jeweils mit den Ebenen ($L_0$ bis $L_{l-1}$), mit Dämpfungsparametern ($\alpha_0$ bis $\alpha_{l-1}$) und Schwellen ($TH_0$ bis $TH_{l-1}$) verbunden sind, die umso geringer sind, als die zugehörigen Ebenen von der gegebenen Zelle entfernt sind, wobei die Trägerfrequenzen in einer Klasse ($CP_i$) Empfangsleistungen ($PR_{NB}$) an einem Punkt ($MS_{BB}$; $BS_{BB}$), der sich in der gegebenen Zelle ($C_{BB,nc}$) und in dem bestimmten Sektor ($S_{ns}$) befindet, haben, die zwischen der der Klasse zugeordneten Schwelle ($TH_i$) und der vorhergehenden Schwelle ($TH_{l-1}$) liegen, ein Mittel ($IR_{ns}$), um durch einen Dämpfungsparameter ($\alpha_i$) eine vorbestimmte Leistung ($P_{NB}$) für jede zu entsendende Unterträgerfrequenz ($f_{BB}$) zu dämpfen, wenn die Unterträgerfrequenz nahe einer Trägerfrequenz ($f_{NB}$) ist, die der dem Dämpfungsparameer ($\alpha_i$) zugeordneten Klasse ($CP_i$) nahe ist, und ein Mittel ($IR_{ns}$), um in dem bestimmten Sektor ($S_{ns}$) die anderen Unterträgerfrequenzen ($f_{BB}$) mit der vorbestimmten Sendeleistung ($P_{NB}$) als die nahen Unterträgerfrequenzen zu entsenden.

**13.** Breitbandradiokommunikationsnetz (R$_{BB}$), umfassend als erstes Netz Basisstationen (BS$_{BB}$) mit mehreren Richtungssektoren als Sender-Empfänger nach Anspruch 12, um Unterträgerfrequenzen (f$_{BB}$) zu entsenden, die in einem Frequenzband ($\Delta$F$_{DL}$) enthalten sind, das für absteigende Verbindungen bestimmt ist, und die Sendeleistungen haben, die an Sendeleistungen von Trägerfrequenzen (f$_{NB}$) anzupassen sind, die in dem Frequenzband ($\Delta$F$_{DL}$) eingeschlossen sind, das für die absteigenden Verbindungen bestimmt ist, und die geeignet sind, von Allseitenbasisstationen (BS$_{NB}$) in einem Schmalbandradiokommunikationsnetz (R$_{NB}$) als zweites Netz, das mit dem Breitbandnetz co-lokalisiert ist, entsandt zu werden, und Mobilgeräte (MS$_{BB}$) als Sender-Empfänger nach Anspruch 12, um weitere Unterträgerfrequenzen (f$_{BB}$) zu entsenden, die in einem Frequenzband ($\Delta$F$_{UL}$) enthalten sind, das für aufsteigende Verbindungen bestimmt ist, und die Sendeleistungen haben, die an Sendeleistungen von weiteren Trägerfrequenzen (f$_{NB}$) anzupassen sind, die in dem Frequenzband ($\Delta$F$_{UL}$) enthalten sind, das für die aufsteigenden Verbindungen bestimmt ist, und die geeignet sind, von Mobilgeräten (MS$_{NB}$) in dem Schmalbandnetz entsandt zu werden.

**14.** Computerprogramm, das geeignet ist, in einem Sender-Empfänger (BS$_{BB}$; MS$_{BB}$) eingesetzt zu werden, wobei das Programm **dadurch gekennzeichnet ist, dass** es Befehle umfasst, die, wenn das Programm in dem Sender-Empfänger (BS$_{BB}$; MS$_{BB}$) verwendet wird, das Verfahren nach einem der Ansprüche 1 bis 9 ausgeführt wird.

**Claims**

**1.** Method for adapting subcarrier powers (f$_{BB}$) in a first cellular wireless communication network (R$_{BB}$) having first base stations (BS$_{BB}$) with several directional sectors as a function of the powers of carriers (f$_{NB}$) in a second cellular wireless communication network (R$_{NB}$) having second omnidirectional base stations (BS$_{NB}$), the first and second networks having in common cells (C$_{NB,nc}$) each having first and second collocated base stations (BS$_{BB}$, BS$_{NB}$) and a wide frequency band ($\Delta$F$_{DL}$; $\Delta$F$_{UL}$) including the subcarriers (f$_{BB}$) allocated to the sectors of the first base stations (BS$_{BB}$) and groups (Gf$_{NB,nc}$) of carriers (f$_{NB}$) allocated respectively to the second base stations (BS$_{NB}$) in a cellular pattern of re-use (MC$_{NB}$) of the second network having several concentric levels of cell location (L$_0$ à L$_{l-1}$), comprising an attenuation (E4; E16) by an attenuation parameter ($\alpha_i$) of a predetermined power (P$_{NB}$) for each subcarrier (f$_{BB}$) which is to be transmitted by a transmitter/receiver (BS$_{BB}$; MS$_{BB}$) of the first network (R$_{BB}$) located in a given cell (C$_{BB,nc}$) and in a specified sector (S$_{ns}$) of the given cell and which is adjacent to a carrier (f$_{NB}$) belonging to one of the groups allocated to second base stations (BS$_{NB}$) in preselected cells (C$_{NB,i}$) in the specified sector (S$_{ns}$) and on levels (L$_0$ to L$_{l-1}$) starting from the given cell (C$_{BB,nc}$) below a predetermined high level (L$_l$), the attenuation parameter being all the more low as the respective level (L$_i$) is close to the given cell, the subcarriers (f$_{BB}$) other than said adjacent subcarriers being for transmission with the predetermined transmission power (P$_{NB}$) in the specified sector (S$_{ns}$) by the transmitter/receiver (BS$_{BB}$; MS$_{BB}$).

**2.** Method according to Claim 1, comprising a measurement (E13) of reception powers (PR$_{NB}$) of the carriers (f$_{NB}$) of the groups allocated to the second base stations (BS$_{NB,i}$) of the preselected cells in the specified sector (S$_{ns}$) of the given cell (C$_{BB,nc}$) at a point (MM$_{BB,nc}$; BS$_{BB,nc}$) situated in the given cell (C$_{BB,nc}$) and in the specified sector (S$_{ns}$), and a classification (E15) of the carriers into classes (CP$_i$) associated respectively with the levels (L$_0$ to L$_{l-1}$), with the attenuation parameters ($\alpha_0$ to $\alpha_{l-1}$) and with thresholds (TH$_0$ to TH$_{l-1}$) which are all the more low as the associated levels are distanced from the given cell, the carriers in a class (CP$_i$) having reception powers (PR$_{NB}$) comprised between the threshold (TH$_i$) associated with the class and the preceding threshold (TH$_{i-1}$), the predetermined power (P$_{NB}$) for a subcarrier (f$_{BB}$) which is to be transmitted by the transmitter/receiver (BS$_{BB}$; MS$_{BB}$) being attenuated by an attenuation parameter ($\alpha_i$) when the subcarrier is adjacent to a carrier (f$_{NB}$) belonging to the class (CP$_i$) associated with the attenuation parameter ($\alpha_i$).

**3.** Method according to Claim 2, according to which the measured reception power (PR$_{NB}$) of a carrier (f$_{NB}$) is the average reception power of active traffic routes supported by the carrier.

**4.** Method according to Claim 2, according to which the measured reception power (PR$_{NB}$) of each carrier (f$_{NB}$) of a group allocated to a second base station (BS$_{NB}$) of a preselected cell (C$_{NB,i}$) in the specified sector (S$_{ns}$) is the average of the measured reception powers for all the carriers belonging to the group.

**5.** Method according to Claim 2, according to which the measured reception power (PR$_{NB}$) of each carrier (f$_{NB}$) of a group allocated to a second base station (BS$_{NB}$) of a preselected cell (C$_{NB,i}$) in the specified sector (S$_{ns}$) is the reception power of a control channel supported by one of the carriers of the group.

6. Method according to one of Claims 1 to 5, according to which the attenuation parameters ($\alpha_0$ to $\alpha_{I-1}$) depend upon a target attenuation parameter of the carrier to interference ratio at the reception of carriers ($f_{NB}$) in a transmitter/receiver ($MM_{NB,nc}$) located in a cell of the second network ($R_{NB}$).

7. Method according to Claim 6, according to which the attenuation parameter ($\alpha_i$) for a subcarrier ($f_{BB}$) adjacent to a carrier ($f_{NB}$) belonging to a group allocated to second base stations in preselected cells ($C_{NB,i}$) located on a respective level ($L_i$) is $\alpha_i = k\, D_i^\gamma / D_{NB}^\gamma$, k being a factor which is a function of the target attenuation parameter and of numbers of preselected cells located respectively on the levels ($L_0$ to $L_{I-3}$) lower than the predetermined high level ($L_4$) starting from the given cell ($C_{BB,nc}$), $D_i$ being an average distance between a first base station ($BS_{BB}$) and points ($MS_{NB}$) of the preselected cells on the respective level ($L_i$) which are furthest from the given cell, $D_{NB}$ being the distance of re-use of the cellular pattern ($MC_{NB}$) of the second network, and $\gamma$ being a propagation constant in the networks.

8. Method according to any of Claims 1 to 7, according to which the numbers of preselected cells ($C_{NB,i}$) in the specified sector ($S_{ns}$) on the levels ($L_0$ to $L_{I-3}$) starting from the given cell ($C_{BB,nc}$) are respectively equal at most to the ranks of levels counted from the given cell to the level lower than the predetermined high level ($L_I$), all of the preselected cells ($C_{NB,i}$) on a level being symmetrical relative to the bisector ($B_{ns}$) of the specified sector.

9. Method according to any of Claims 1 to 8, according to which number of levels lower than the high level ($L_I$) is greater than 2, and the attenuation parameters are zero for subcarriers ($f_{BB}$) adjacent to carriers ($f_{NB}$) belonging to groups allocated to second base stations ($BS_{NB}$) in preselected cells ($C_{NB,i}$) in the specified sector ($S_{ns}$) which are situated on at least one of the two first levels ($L_0$, $L_1$).

10. Transmitter/receiver ($BS_{BB}$; $MS_{BB}$) capable of being located in a given cell ($C_{BB,nc}$) of a first cellular wireless communication network ($R_{BB}$) in order to adapt the transmission powers of subcarriers ($f_{BB}$) as a function of the transmission powers of carriers ($f_{NB}$) in a second cellular wireless communication network ($R_{NB}$), the first and second networks having in common cells ($C_{NB,nc}$) each having, collocated, a first base station ($BS_{BB}$) with several directional sectors of the first network and a second omnidirectional base station ($BS_{NB}$) of the second network and a wide frequency band ($\Delta F_{DL}$; $\Delta F_{UL}$) including the subcarriers ($f_{BB}$) allocated to the sectors of the first base stations ($BS_{BB}$) and the groups ($Gf_{NB,nc}$) of carriers ($f_{NB}$) allocated respectively to the second base stations ($BS_{NB}$) in a cellular pattern of re-use ($MC_{NB}$) of the second network having several concentric levels of cell location ($L_0$ to $L_{I-1}$), comprising a means ($IR_{ns}$) for attenuation by an attenuation parameter ($\alpha_i$) of a predetermined power ($P_{NB}$) of each subcarrier ($f_{BB}$) which is to be transmitted in a specified sector ($S_{ns}$) of the given cell ($C_{BB,nc}$) and which is adjacent to a carrier ($f_{NB}$) belonging to one of the groups allocated to second base stations ($BS_{NB}$) in preselected cells ($C_{NB,i}$) in the specified sector ($S_{ns}$) and on levels ($L_0$ to $L_{I-1}$) starting from the given cell ($C_{BB,nc}$) below a predetermined high level ($L_I$), the attenuation parameter being all the more low as the respective level ($L_i$) is close to the given cell, and a means ($IR_{ns}$) for transmitting the subcarriers ($f_{BB}$) in the specified sector ($S_{ns}$) with the predetermined transmission power ($P_{NB}$) other than said adjacent subcarriers.

11. Broadband wireless communication network ($R_{BB}$) comprising, as first network, base stations ($BS_{BB}$) with several directional sectors as transmitter/receivers according to Claim 10 in order to transmit subcarriers ($f_{BB}$) comprised in a frequency band ($\Delta F_{DL}$) dedicated to downlinks and having transmission powers to adapt to the transmission powers of carriers ($f_{NB}$) included in the frequency band ($\Delta F_{DL}$) dedicated to the downlinks and capable of being transmitted by omnidirectional base stations ($BS_{NB}$) in a narrowband wireless communication network ($R_{NB}$) as second network collocated with the broadband network, and mobiles ($MS_{BB}$) as transmitter/receivers according to Claim 10 in order to transmit other subcarriers ($f_{BB}$) comprised in a frequency band ($\Delta F_{UL}$) dedicated to uplinks and having transmission powers to adapt to the transmission powers of other carriers ($f_{NB}$) included in the frequency band ($\Delta F_{UL}$) dedicated to the uplinks and capable of being transmitted by mobiles ($MS_{NB}$) in the narrowband network.

12. Transmitter/receiver ($BS_{BB}$; $MS_{BB}$) capable of being located in a given cell ($C_{BB,nc}$) of a first cellular wireless communication network ($R_{BB}$) in order to adapt the transmission powers of subcarriers ($f_{BB}$) as a function of the transmission power of carriers ($f_{NB}$) in a second cellular wireless communication network ($R_{NB}$), the first and second networks having in common cells ($C_{NB,nc}$) each having, collocated, a first base station ($BS_{BB}$) with several directional sectors of the first network and a second omnidirectional base station ($BS_{NB}$) of the second network and a wide frequency band ($\Delta F_{DL}$; $\Delta F_{UL}$) including the subcarriers ($f_{BB}$) allocated to the sectors of the first base stations ($BS_{BB}$) and the groups ($Gf_{NB,nc}$) of carriers ($f_{NB}$) allocated respectively to the second base stations ($BS_{NB}$) in a cellular pattern of re-use ($MC_{NB}$) of the second network having several concentric levels of cell location ($L_0$ to $L_{I-1}$), comprising a means ($UGP$) for classifying carriers of groups allocated to second base stations ($BS_{NB,i}$) of preselected cells in a specified sector ($S_{ns}$) of the given cell ($C_{BB,nc}$) and on levels ($L_0$ to $L_{I-1}$) starting from the given cell below a predetermined high level ($L_I$), into classes ($CP_i$) associated respectively with the levels ($L_0$ to $L_{I-1}$), with the attenuation parameters ($\alpha_0$ to $\alpha_{I-1}$) and with thresholds ($TH_0$ to $TH_{I-1}$) which are all the more low as the associated levels are distanced from the given cell, the carriers in a class ($CP_i$) having reception powers ($PR_{NB}$) at a point ($MS_{BB}$; $BS_{BB}$) situated in the given cell ($C_{BB,nc}$) and in the specified sector ($S_{ns}$) comprised between the threshold ($TH_i$) associated with the class and the preceding threshold ($TH_{i-1}$), a means ($IR_{ns}$) for attenuating by an attenuation parameter ($\alpha_i$) a predetermined power ($P_{NB}$) for each subcarrier ($f_{BB}$) which is to be transmitted when the subcarrier is adjacent to a carrier ($f_{NB}$) belonging to the class ($CP_i$) associated with the attenuation parameter ($\alpha_i$), and a means ($IR_{ns}$) for transmitting the subcarriers ($f_{BB}$) in the specified sector ($S_{ns}$) with the predetermined transmission power ($P_{NB}$) other than said adjacent subcarriers.

13. Broadband wireless communication network ($R_{BB}$) comprising, as first network, base stations ($BS_{BB}$) with several directional sectors as transmitter/receivers according to Claim 12 in order to transmit subcarriers ($f_{BB}$) comprised in a frequency band ($\Delta F_{DL}$) dedicated to downlinks and having transmission powers to adapt to transmission powers of carriers ($f_{NB}$) included in the frequency band ($\Delta F_{DL}$) dedicated to the downlinks and capable of being transmitted by omnidirectional base stations ($BS_{NB}$) in a narrowband wireless communication network ($R_{NB}$) as second network collocated with the broadband network, and mobiles ($MS_{BB}$) as transmitter/receivers according to Claim 12 in order to transmit other subcarriers ($f_{BB}$) comprised in a frequency band ($\Delta F_{UL}$) dedicated to uplinks and having transmission powers to adapt to transmission powers of other carriers ($f_{NB}$) included in the frequency band ($\Delta F_{UL}$) dedicated to the uplinks and capable of being transmitted by mobiles ($MS_{NB}$) in the narrowband network.

14. Computer program capable of being implemented in a transmitter/receiver ($BS_{BB}$; $MS_{BB}$), said program being **characterised in that** it comprises instructions which, when the program is executed in the transmitter/receiver ($BS_{BB}$; $MS_{BB}$), carry out the method according to one of Claims 1 to 9.

# FIG. 1

# FIG. 2

# FIG. 3

# FIG. 6

# FIG. 11

# FIG. 4

# FIG. 5

**FIG. 7**

**FIG. 8**

# FIG. 9

E1

$$ME : f_{NB} \in Gf_{NB,i} \in C_{NB,i} \in L_i$$
$$0 \leq i \leq I - 1$$

E2

$$UA : (f_{NB}, f_{BB} \approx f_{NB})$$

E3

$$ME : (\alpha_i \text{ pour } Gf_{NB,i} \in C_{NB,i} \in L_i)$$

E4

$$IR_{ns} \rightarrow (f_{BB} \quad f_{NB} \in Gf_{NB,i} ; P_{BB,i} = \alpha_i P_{NB,i}) \rightarrow MS_{BB}$$

# FIG. 10

$S_1$

$S_{ns} = S_2$

$S_{NS} = S_3$

$IR_1$

$IR_{ns} = IR_2$

$IR_3$

| Interface radio | Interface radio | Interface radio |

UA

Unité d'Association $(f_{NB}, f_{BB})$

ME

Mémoire
$f_{BB} \quad f_{NB} \in Gf_{NB,i} \in C_{NB,i} ; \alpha_i$

$BS_{BB,nc}$

# FIG. 12

E10 │ ME, $MM_{BB,nc}$ : $f_{NB} \in Gf_{NB,i} \in C_{NB,i} \in L_i$
$0 \le i \le I - 1$

E11 │ UA: $(f_{NB}, f_{BB} \quad f_{NB})$

E12 │ ME : $(\alpha_i, TH_i$ pour $Gf_{NB,i} \in C_{NB,i} \in L_i)$
$\alpha_{i-1} \le \alpha_i , ; TH_{i-1} > TH_i$

E13 │ $MM_{BB,nc}$ : mesurer $PR_{NB}$
pour $f_{NB} \in Gf_{NB,i} \in C_{NB,i} \in L_i \; \forall \; i$

E14 │ $MM_{BB,nc} \rightarrow (PR_{NB}; f_{NB}) \rightarrow BS_{BB,nc}$

E15 │ UCP : $f_{NB} \in CP_i$ si $TH_{i-1} > PR_{NB}(f_{NB}) \ge TH_i$

E16 │ $IR_{ns} \rightarrow (f_{BB} \quad f_{NB} \in CP_i ; P_{BB,i} = \alpha_i \, P_{NB,i}) \rightarrow MS_{BB}$

# FIG. 13

Mobile de mesure ⟶ $MM_{BB,nc}$

$S_1$     $S_{ns} = S_2$     $S_{NS} = S_3$

$IR_1$    $IR_{ns} = IR_2$    $IR_3$

Interface radio    Interface radio    Interface radio

$PR_{NB}$     $P_{BB,i}$

UCP ⟶ Unité de classement de $PR_{NB}$     Unité d'association $(f_{NB}, f_{BB})$ ⟵ UA

ME

Mémoire
$f_{BB} \quad f_{NB} \in CP_{NB,i}(TH_{i-1} \le PR_{NB}(f_{NB}) \le TH_i) ; \alpha_i$

⟵ $BS_{BB,nc}$

**EP 2 684 400 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009068727 A1